(19) Europäisches Patentamt
European Patent Office
Office européen des brevets

(11) **EP 4 340 094 A1**

(12) **EUROPEAN PATENT APPLICATION**
published in accordance with Art. 153(4) EPC


(43) Date of publication:
**20.03.2024 Bulletin 2024/12**

(21) Application number: **22807512.3**

(22) Date of filing: **11.05.2022**

(51) International Patent Classification (IPC):
***H01M 10/0567*** *(2010.01)* ***H01M 10/054*** *(2010.01)*
***H01M 10/0568*** *(2010.01)* ***H01M 10/0569*** *(2010.01)*
***H01M 10/058*** *(2010.01)*

(52) Cooperative Patent Classification (CPC):
**H01M 10/054; H01M 10/0567; H01M 10/0568; H01M 10/0569; H01M 10/058;** Y02E 60/10

(86) International application number:
**PCT/JP2022/019976**

(87) International publication number:
**WO 2022/239813 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2021 JP 2021082006**



(71) Applicant: **Central Glass Co., Ltd.**
**Yamaguchi 755-0001 (JP)**

(72) Inventors:
- **KAWAHARA Kei**
  **Ube-shi, Yamaguchi 755-0001 (JP)**
- **SHIMIZU Genki**
  **Ube-shi, Yamaguchi 755-0001 (JP)**
- **MORINAKA Takayoshi**
  **Ube-shi, Yamaguchi 755-0001 (JP)**

(74) Representative: **Mewburn Ellis LLP**
**Aurora Building**
**Counterslip**
**Bristol BS1 6BX (GB)**


(54) **ELECTROLYTE FOR NON-AQUEOUS SODIUM ION BATTERY, NON-AQUEOUS SODIUM ION BATTERY, AND METHOD FOR PRODUCING NON-AQUEOUS SODIUM ION BATTERY**


(57) The present disclosure provides: an electrolyte solution for a nonaqueous sodium ion battery including (1) a fluorosulfate, (II) at least one selected from the group consisting of compounds represented by specific Formulae (1) to (9), vinylene carbonate, tris(trimethylsilyl)borate, and tris(trimethylsilyl)phosphate, (III) a sodium salt, and (IV) a nonaqueous solvent; a nonaqueous sodium ion battery including at least a positive electrode, a negative electrode, and the electrolyte solution for a nonaqueous sodium ion battery; and a method for producing the nonaqueous sodium ion battery.


FIG. 1

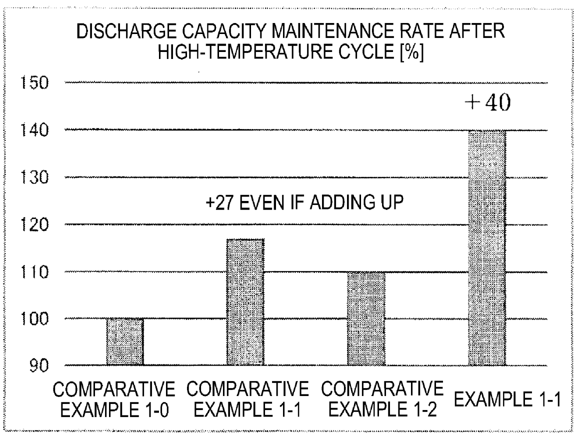


EP 4 340 094 A1

## Description

TECHNICAL FIELD

One embodiment of the present disclosure relates to an electrolyte solution for a nonaqueous sodium ion battery, a nonaqueous sodium ion battery using the same, and a method for producing the nonaqueous sodium ion battery.

BACKGROUND ART

In recent years, lithium ion batteries are attracting attention as power storage systems for information-related devices and communication devices, that is, power storage systems for compact and high-energy-density applications such as personal computers, video cameras, digital still cameras, and mobile phones and power storage systems for large-scale power applications such as electric vehicles, hybrid vehicles, auxiliary power sources for fuel cell vehicles, and power storage. On the other hand, a price of lithium has increased, and a sodium ion battery, which is less expensive, has attracted attention as a next generation secondary battery (Patent Literature 1).

In nonaqueous sodium ion batteries, a variety of additives to prevent deterioration due to decomposition of the electrolyte solution on surfaces of active positive and negative electrodes have been proposed. For example, Patent Literature 2 discloses a nonaqueous electrolyte solution for a sodium secondary battery having an improved charge-discharge cycle characteristic by containing a compound having a -(S=O)- bond such as a sulfonic acid ester compound (for example, methylenebis(benzenesulfonate), methylenebis(2-trifluoromethylbenzenesulfonate), and methylbenzenesulfonate) or a sulfoxide compound (for example, dimethyl sulfoxide).

On the other hand, Patent Literatures 3 and 4 disclose that addition of a fluorosulfate to a nonaqueous lithium ion battery electrolyte solution improves high-temperature durability and an output characteristic.

CITATION LIST

PATENT LITERATURE

Patent Literature 1: JP2013-48077A
Patent Literature 2: JP2016-181467A
Patent Literature 3: JP2011-187440A
Patent Literature 4: WO2018/179884

SUMMARY OF INVENTION

TECHNICAL PROBLEM

A nonaqueous sodium ion battery has already started to put into practical use, but as a result of studies performed by the present inventors, it has been found that there is room for improvement in terms of a cycle characteristic, (an effect of preventing) a gas generation amount during a high-temperature cycle test, and a high-temperature storage characteristic in applications where the nonaqueous sodium ion battery is used at a high temperature for a long period of time, such as automobiles.

Therefore, according to one embodiment of the present disclosure, an object of one embodiment of the present disclosure is to provide an electrolyte solution for a nonaqueous sodium ion battery capable of improving at least one of a cycle characteristic of the nonaqueous sodium ion battery at a high temperature of 60°C or higher, (an effect of preventing) a gas generation amount during a high-temperature cycle test, and a high-temperature storage characteristic, a nonaqueous sodium ion battery using the same, and a method for producing the nonaqueous sodium ion battery.

SOLUTION TO PROBLEM

As a result of intensive studies in view of such problems, the present inventors have found that an electrolyte solution for a nonaqueous sodium ion battery capable of improving at least one of a cycle characteristic of the nonaqueous sodium ion battery at a high temperature of 60°C or higher, (an effect of preventing) a gas generation amount during a high-temperature cycle test, and a high-temperature storage characteristic can be obtained by using an electrolyte solution for a nonaqueous sodium ion battery containing (1) a fluorosulfate, (II) at least one selected from the group consisting of compounds represented by the following Formulae (1) to (9), vinylene carbonate, tris(trimethylsilyl)borate,

and tris(trimethylsilyl)phosphate, (III) a sodium salt, and (IV) a nonaqueous solvent, and have completed the present disclosure.

That is, the present disclosure includes the following embodiments.

[1]

An electrolyte solution for a nonaqueous sodium ion battery, including:

(I) a fluorosulfate;
(II) at least one selected from the group consisting of compounds represented by the following Formulae (1) to (9), vinylene carbonate, tris(trimethylsilyl)borate, and tris(trimethylsilyl)phosphate;
(III) a sodium salt; and
(IV) a nonaqueous solvent.

[Chem. 1]

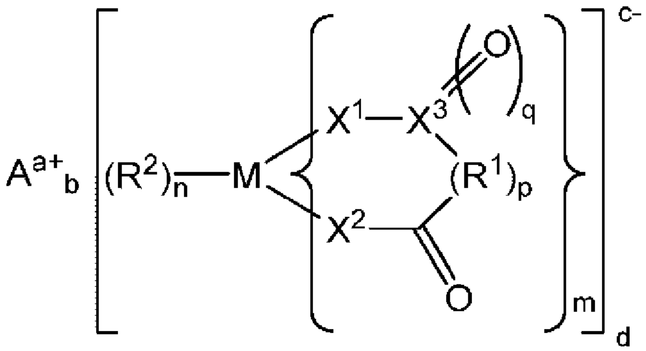

(1)

[In Formula (1), M represents a boron atom or a phosphorus atom, m is an integer of 1 to 3, n is an integer of 0 to 4, p is 0 or 1, $R^1$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (each of these groups may contain a substituent or a heteroatom in a structure thereof), when p is 1 and m is 2 or more, m R's may bond to each other, and when p is 0, $R^1$ does not exist and is a single bond;

$R^2$ represents a halogen atom, $X^1$ and $X^2$ each independently represent an oxygen atom or a sulfur atom, $X^3$ represents a carbon atom or a sulfur atom, and q is 1 when $X^3$ is the carbon atom, and is 1 or 2 when $X^3$ is the sulfur atom;

$A^{a+}$ represents an alkali metal cation, an alkaline earth metal cation, or an onium cation, a represents a valence number of a cation; and

a to d are each independently 1 or 2, and satisfy a × b = c × d.]

[Chem. 2]

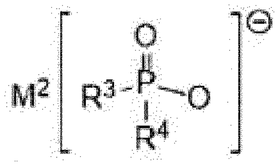

(2)

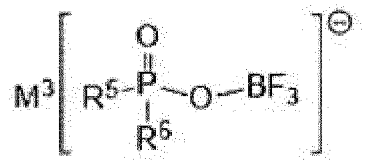

(3)

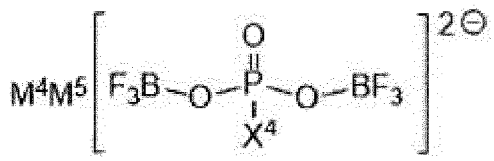

(4)

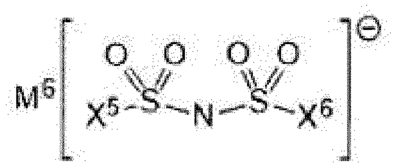

(5)

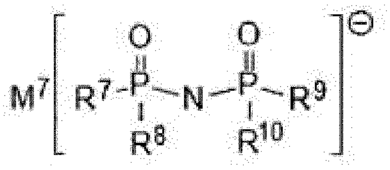

(6)

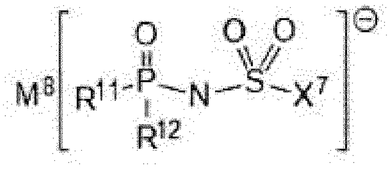

(7)

[In Formulae (2), (3), (6), and (7), $R^3$ to $R^{12}$ are each independently a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond is optionally present in the organic group;

in Formula (4), $X^4$ represents a fluorine atom;

in Formulae (5) and (7), $X^5$ to $X^7$ are each independently a fluorine atom, or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, a fluorine atom, an oxygen atom, and/or an unsaturated bond is optionally present in the organic group, and each of Formulae (2) to (7) includes at least one P-F bond and/or S-F bond; and

in Formulae (2) to (7), $M^2$ to $M^8$ are each independently a proton, a metal cation, or an onium cation.]

[Chem. 3]

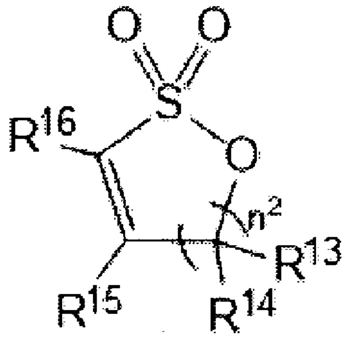

(8)

[In Formula (8), $R^{13}$ to $R^{16}$ are each independently a hydrogen atom, an alkyl group having 1 to 10 carbon atoms, or a fluoroalkyl group having 1 to 10 carbon atoms, and $n^2$ is an integer of 1 to 3.]

[Chem. 4]

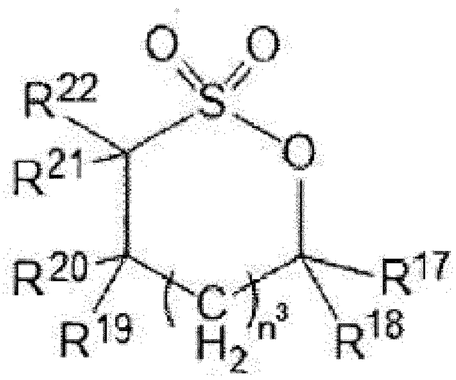

(9)

[In Formula (9), $R^{17}$ to $R^{22}$ are each independently a hydrogen atom, an alkyl group having 1 to 10 carbon atoms, or a fluoroalkyl group having 1 to 10 carbon atoms, and $n^3$ is an integer of 0 to 2.]

[2] The electrolyte solution for a nonaqueous sodium ion battery according to [1], in which a content x of the (1) satisfies 0.008 mass% < x < 7.5 mass% with respect to the total amount of the electrolyte solution for a nonaqueous sodium ion battery.
[3] The electrolyte solution for a nonaqueous sodium ion battery according to [1] or [2], in which a counter cation of the (1) is a lithium ion, a sodium ion, a potassium ion, a tetraalkylammonium ion, a tetraalkylphosphonium ion, or an ammonium ion having a spiro skeleton.
[4] The electrolyte solution for a nonaqueous sodium ion battery according to any one of [1] to [3], in which a content y of the (II) satisfies 0.1 mass% < y < 5.0 mass% with respect to the total amount of the electrolyte solution for a nonaqueous sodium ion battery.
[5] The electrolyte solution for a nonaqueous sodium ion battery according to any one of [1] to [4], in which the compound represented by the Formula (1) is at least one selected from the group consisting of $NaBF_2(C_2O_4)$, $NaPF_4(C_2O_4)$, $NaPF_2(C_2O_4)_2$, and $NaP(C_2O_4)_3$.
[6] The electrolyte solution for a nonaqueous sodium ion battery according to any one of [1] to [5], in which the compound represented by the Formula (2) is at least one selected from the group consisting of compounds in which $R^3$ and $R^4$ are each independently a fluorine atom, a methoxy group, an ethoxy group, or a propargyloxy group, and $M^2$ is a lithium ion, a sodium ion, a potassium ion, or a tetraalkylammonium ion.
[7] The electrolyte solution for a nonaqueous sodium ion battery according to any one of [1] to [6], in which the compound represented by the Formula (3) is at least one selected from the group consisting of compounds in which

$R^5$ and $R^6$ are each independently a fluorine atom, a methoxy group, or an ethoxy group, and $M^3$ is a lithium ion, a sodium ion, a potassium ion, or a tetraalkylammonium ion.

[8] The electrolyte solution for a nonaqueous sodium ion battery according to any one of [1] to [7], in which the compound represented by the Formula (4) is at least one selected from the group consisting of compounds in which $M^4$ and $M^5$ are each independently a lithium ion, a sodium ion, a potassium ion, or a tetraalkylammonium ion.

[9] The electrolyte solution for a nonaqueous sodium ion battery according to any one of [1] to [8], in which the compound represented by the Formula (5) is at least one selected from the group consisting of $LiN(SO_2F)_2$, $LiN(SO_2F)(SO_2CF_3)$, $NaN(SO_2F)_2$, $NaN(SO_2F)(SO_2CF_3)$, $KN(SO_2F)_2$, and $KN(SO_2F)(SO_2CF_3)$.

[10] The electrolyte solution for a nonaqueous sodium ion battery according to any one of [1] to [9], in which the compound represented by the Formula (6) is at least one selected from the group consisting of $LiN(POF_2)_2$, $LiN(POF_2)(PO(OCH_3)_2)$, $NaN(POF_2)_2$, $NaN(POF_2)(PO(OCH_3)_2)$, $KN(POF_2)_2$, and $KN(POF_2)(PO(OCH_3)_2)$.

[11] The electrolyte solution for a nonaqueous sodium ion battery according to any one of [1] to [10], in which the compound represented by the Formula (7) is at least one selected from the group consisting of $LiN(POF_2)(SO_2F)$, $LiN(PO(OCH_3)_2)(SO_2F)$, $NaN(POF_2)(SO_2F)$, $NaN(PO(OCH_3)_2)(SO_2F)$, $KN(POF_2)(SO_2F)$, and $KN(PO(OCH_3)_2)(SO_2F)$.

[12] The electrolyte solution for a nonaqueous sodium ion battery according to any one of [1] to [11], in which the compound represented by the Formula (8) is at least one selected from the group consisting of 1,3-propene sultone, 1,4-butene sultone, and 2-methyl-1,3-propene sultone.

[13] The electrolyte solution for a nonaqueous sodium ion battery according to any one of [1] to [12], in which the compound represented by the Formula (9) is at least one selected from the group consisting of 1,3-propane sultone, 1,4-butane sultone, 1-methyl-1,3-propane sultone, and 3-methyl-1,3-propane sultone.

[14] The electrolyte solution for a nonaqueous sodium ion battery according to any one of [1] to [13], in which the nonaqueous solvent contains at least one selected from the group consisting of a cyclic ester, a chain ester, a cyclic ether, and a chain ether.

[15] The electrolyte solution for a nonaqueous sodium ion battery according to any one of [1] to [14], in which the sodium salt is at least one selected from the group consisting of $NaPF_6$, $NaBF_4$, $NaBF_2(C_2O_4)$, $NaPF_4(C_2O_4)$, $NaPF_2(C_2O_4)_2$, $NaSbF_6$, $NaAsF_6$, $NaClO_4$, $NaN(SO_2F)_2$, $NaN(SO_2CF_3)_2$, $NaN(SO_2F)(SO_2CF_3)$, $NaN(C_aF_{2a+1}SO_2)(C_bF_{2b+1}SO_2)$, where a and b are integers satisfying $2 \leq a \leq 20$ and $2 \leq b \leq 20$, $NaSO_3CF_3$, $NaSO_3C_4F_9$, $NaN(POF_2)_2$, $NaN(POF_2)(SO_2F)$, $NaPO_2F_2$, $NaC(SO_2CF_3)_3$, $NaPF_3(C_3F_7)_3$, $NaB(CF_3)_4$, $NaBF_3(C_2F_5)$, $NaAlO_2$, $NaAlCl_4$, NaCl, and NaI.

[16] The electrolyte solution for a nonaqueous sodium ion battery according to any one of [1] to [15], in which a concentration z of the (III) satisfies 0.3 mol/L < z < 5.0 mol/L with respect to the total amount of the electrolyte solution for a nonaqueous sodium ion battery.

[17] The electrolyte solution for a nonaqueous sodium ion battery according to any one of [1] to [16], further including: at least one compound selected from the group consisting of cyclohexylbenzene, t-butyl benzene, t-amyl benzene, fluorobenzene, a vinylene carbonate oligomer (in which a number average molecular weight is 170 to 5,000), vinyl ethylene carbonate, fluoroethylene carbonate, 1,6-diisocyanatohexane, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, succinonitrile, (ethoxy)pentafluorocyclotriphosphazene, methane sulfonyl fluoride, tetrafluoro(picolinato)phosphate, and 1,3-dimethyl-1,3 -divinyl-1,3-di(1,1,1,3,3,3 -hexafluoroisopropyl)disiloxane.

[18] A nonaqueous sodium ion battery including at least a positive electrode, a negative electrode, and the electrolyte solution for a nonaqueous sodium ion battery according to any one of [1] to [17].

[19] A method for producing a nonaqueous sodium ion battery, the method including preparing the electrolyte solution for a nonaqueous sodium ion battery according to any one of [1] to [17], and filling an empty cell including at least a positive electrode and a negative electrode with the electrolyte solution for a nonaqueous sodium ion battery.

ADVANTAGEOUS EFFECTS OF INVENTION

One embodiment of the present disclosure allows for providing an electrolyte solution for a nonaqueous sodium ion battery capable of improving at least one of a cycle characteristic of the nonaqueous sodium ion battery at a high temperature of 60°C or higher, (an effect of preventing) a gas generation amount during a high-temperature cycle test, and a high-temperature storage characteristic, a nonaqueous sodium ion battery using the same, and a method for producing the nonaqueous sodium ion battery are provided.

BRIEF DESCRIPTION OF DRAWINGS

FIG. 1 is a diagram showing evaluation results related to discharge capacity maintenance rates after a high-temperature cycle in Example 1-1 and Comparative Examples 1-0, 1-1, and 1-2.

FIG. 2 is a diagram showing evaluation results related to gas generation amounts during the high-temperature cycle in Example 1-1 and Comparative Examples 1-0, 1-1, and 1-2.

FIG. 3 is a diagram showing evaluation results of recovery discharge capacity maintenance rates after high-temperature storage in Example 1-1 and Comparative Examples 1-0, 1-1, and 1-2.

DESCRIPTION OF EMBODIMENTS

Hereinafter, each embodiment of the present disclosure will be described. However, the present disclosure can be implemented in various aspects without departing from the gist thereof, and should not be construed as being limited to the description of the embodiments or Examples illustrated below. In addition, among other actions and effects different from the actions and effects brought about by the following embodiments or the aspects of Examples, the actions and effects obvious from the description of the present specification or the actions and effects easily predicted by a person skilled in the art are construed as being brought about by the present disclosure.

Ranges expressed with "to" in the present specification mean ranges including numerical values indicated before and after "to" as a lower limit and an upper limit.

[1. Electrolyte Solution for Nonaqueous Sodium Ion Battery]

An electrolyte solution for a nonaqueous sodium ion battery according to one embodiment of the present disclosure includes:

(I) a fluorosulfate (hereinafter sometimes referred to as a "component (I)" or simply "(I)");

(II) at least one selected from the group consisting of compounds represented by the following Formulae (1) to (9), vinylene carbonate, tris(trimethylsilyl)borate, and tris(trimethylsilyl)phosphate (hereinafter, sometimes referred to as a "component (II)" or simply "(II)");

(III) a sodium salt (hereinafter sometimes referred to as a "component (111)" or simply "(III)"); and

(IV) a nonaqueous solvent (hereinafter sometimes referred to as a "component (IV)" or simply "(IV)").

[Chem. 5]

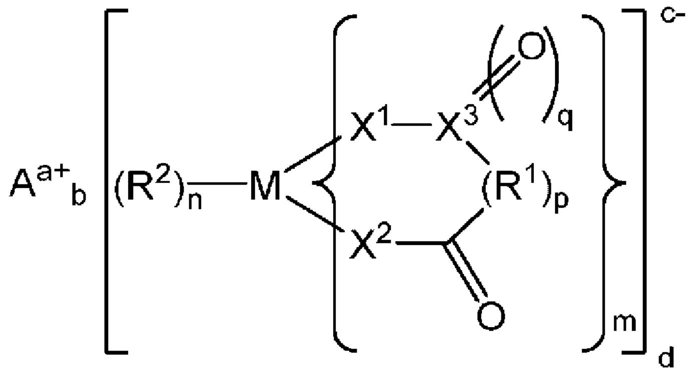

(1)

[In Formula (1), M represents a boron atom or a phosphorus atom, m is an integer of 1 to 3, n is an integer of 0 to 4, p is 0 or 1, $R^1$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (each of these groups may contain a substituent or a heteroatom in a structure thereof), when p is 1 and m is 2 or more, m R's may bond to each other, and when p is 0, $R^1$ does not exist and is a single bond;

$R^2$ represents a halogen atom, $X^1$ and $X^2$ each independently represent an oxygen atom or a sulfur atom, $X^3$ represents a carbon atom or a sulfur atom, and q is 1 when $X^3$ is the carbon atom, and is 1 or 2 when $X^3$ is the sulfur atom;

$A^{a+}$ represents an alkali metal cation, an alkaline earth metal cation, or an onium cation, a represents a valence number of a cation; and

a to d are each independently 1 or 2, and satisfy a $\times$ b = c $\times$ d.]

[Chem. 6]

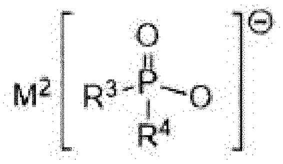

(2)

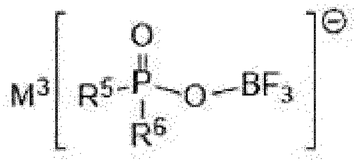

(3)

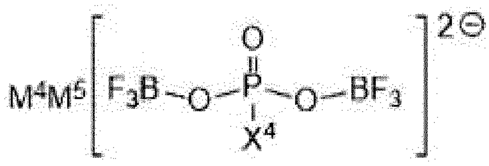

(4)

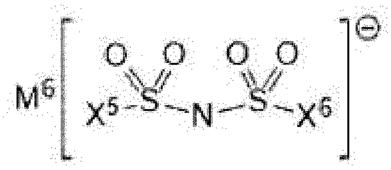

(5)

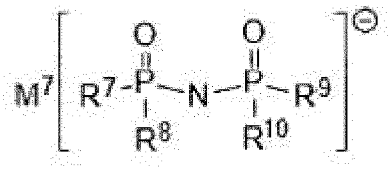

(6)

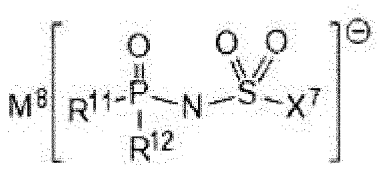

(7)

[In Formulae (2), (3), (6), and (7), $R^3$ to $R^{12}$ are each independently a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond is optionally present in the organic group;

in Formula (4), $X^4$ represents a fluorine atom;

In Formulae (5) and (7), $X^5$ to $X^7$ are each independently a fluorine atom, or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond is optionally present in the organic group, and each of Formulae (2) to (7) includes at least one P-F bond and/or S-F bond; and

in Formulae (2) to (7), $M^2$ to $M^8$ are each independently a proton, a metal cation, or an onium cation.]

[Chem. 7]

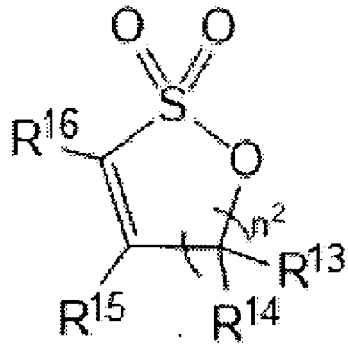

(8)

[In Formula (8), $R^{13}$ to $R^{16}$ are each independently a hydrogen atom, an alkyl group having 1 to 10 carbon atoms, or a fluoroalkyl group having 1 to 10 carbon atoms, and $n^2$ is an integer of 1 to 3.]

[Chem. 8]

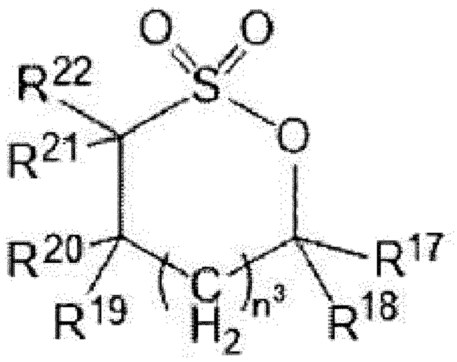

(9)

[In Formula (9), $R^{17}$ to $R^{22}$ are each independently a hydrogen atom, an alkyl group having 1 to 10 carbon atoms, or a fluoroalkyl group having 1 to 10 carbon atoms, and $n^3$ is an integer of 0 to 2.]

Further, if necessary, it is possible to use other commonly known additives in combination.

The electrolyte solution for a nonaqueous sodium ion battery according to the present embodiment can improve at least one of a cycle characteristic at a high temperature of 60°C or higher, (an effect of preventing) a gas generation amount during a high-temperature cycle test, and a high-temperature storage characteristic by having the above-described configuration. Although the details of this mechanism are not clear, it is presumed that a good film can be formed on an electrode by containing the component (II) together with the fluorosulfate.

Hereinafter, each component of the electrolyte solution for a nonaqueous sodium ion battery according to the present embodiment will be described in detail.

[(1) Fluorosulfate]

The fluorosulfate is an ionic salt having an anion represented by $SO_3F^-$ and a counter cation.

As the counter cation of the fluorosulfate, various counter cations can be selected without any limitation on a type of counter cation as long as the counter cation does not impair performance of the electrolyte solution for a nonaqueous sodium ion battery and the nonaqueous sodium ion battery according to the present embodiment.

Specific examples of the counter cation include metal cations such as lithium ions, sodium ions, potassium ions, rubidium ions, cesium ions, magnesium ions, calcium ions, barium ions, silver ions, copper ions, and iron ions; and onium cations such as tetraalkylammonium ions, tetraalkylpho sphonium ions, imidazolium ions, and ammonium ions having a spiro skeleton. In particular, from a viewpoint of helping ionic conduction in the nonaqueous sodium ion battery, lithium ions, sodium ions, potassium ions, tetraalkylammonium ions, tetraalkylphosphonium ions, or ammonium

ions having a spiro skeleton are preferred, and lithium ions, sodium ions, tetraalkylammonium ions, or ammonium ions having a spiro skeleton are more preferred.

An alkyl group in the tetraalkylammonium ion preferably has 1 to 6 carbon atoms, and an alkyl group in the tetraalkylphosphonium ion preferably has 1 to 6 carbon atoms.

Four alkyl groups in the tetraalkylammonium ion may be the same or different from one another, and four alkyl groups in the tetraalkylphosphonium ion may be the same or different from one another.

The ammonium ion having a spiro skeleton is preferably, for example, 5-azoniaspiro[4.4]nonane.

The fluorosulfate is not limited, but is preferably $NaSO_3F$, $LiSO_3F$, $TEMASO_3F$, $SBPSO_3F$, or $TEASO_3F$, and particularly preferably $NaSO_3F$, $LiSO_3F$, or $TEASO_3F$. Here, TEArepresents tetraethylammonium, TEMA represents triethyl methyl ammonium, and SBP represents 5-azoniaspiro[4.4]nonane.

A content x of the fluorosulfate is not limited, but is preferably 0.001 mass% or more, more preferably 0.008 mass% or more, still more preferably 0.08 mass% or more, and yet still more preferably 1.5 mass% or more with respect to the total amount of the electrolyte solution for a nonaqueous sodium ion battery. Further, the content of the fluorosulfate is not limited, but is preferably 11.5 mass% or less, more preferably 10.5 mass% or less, still more preferably 7.5 mass% or less, and particularly preferably 5.5 mass% or less with respect to the total amount of the electrolyte solution for a nonaqueous sodium ion battery. When the content of the fluorosulfate is 0.001 mass% or more, at least one of a cycle characteristic of the nonaqueous sodium ion battery at the high temperature of 60°C or higher, (the effect of preventing) the gas generation amount during the high-temperature cycle test, and the high-temperature storage characteristic can be improved. Further, when the content is 11.5 mass% or less, the film formed on the electrode does not become too thick, and this hardly leads to an increase in resistance.

One type of the fluorosulfates may be used alone, or two or more types thereof may be mixed and used in any combination and any proportion according to an application.

In one aspect, the content x of the fluorosulfate preferably satisfies 0.008 mass% $< x \leq$ 11.5 mass%, more preferably satisfies 0.008 mass% $< x \leq$ 10.5 mass%, still more preferably satisfies 0.008 mass% $< x \leq$ 7.5 mass%, and particularly preferably satisfies 1.5 mass% $< x \leq$ 5.5 mass% with respect to the total amount of the electrolyte solution for a nonaqueous sodium ion battery.

[(II) At least One Selected from Group Consisting of Compounds Represented by Formulae (1) to (9), Vinylene Carbonate, Tris(trimethylsilyl)borate, and Tris(trimethylsilyl)phosphate]

Hereinafter, the component (II) will be described. The compounds represented by Formulae (1) to (9) are shown below.

[Chem. 9]

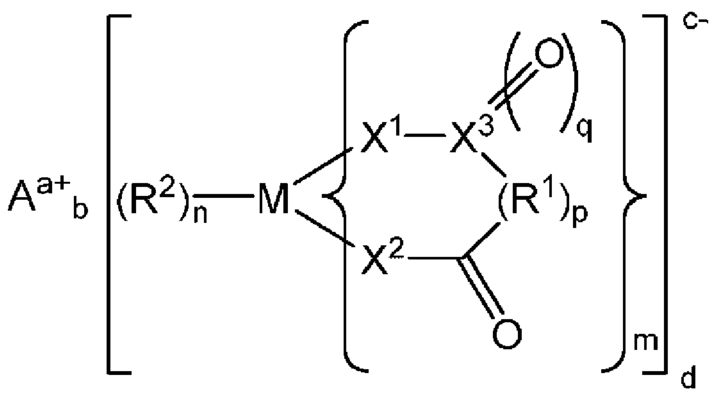

(1)

[In Formula (1), M represents a boron atom or a phosphorus atom, m is an integer of 1 to 3, n is an integer of 0 to 4, p is 0 or 1, $R^1$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (each of these groups may contain a substituent or a heteroatom in a structure thereof), when p is 1 and m is 2 or more, m R's may bond to each other, and when p is 0, $R^1$ does not exist and is a single bond;

$R^2$ represents a halogen atom, $X^1$ and $X^2$ each independently represent an oxygen atom or a sulfur atom, $X^3$ represents a carbon atom or a sulfur atom, and q is 1 when $X^3$ is the carbon atom, and is 1 or 2 when $X^3$ is the

sulfur atom;

$A^{a+}$ represents an alkali metal cation, an alkaline earth metal cation, or an onium cation, a represents a valence number of a cation; and

a to d are each independently 1 or 2, and satisfy a × b = c × d.]

[Chem. 10]

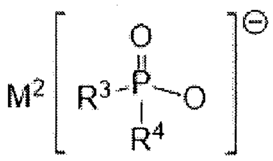

(2)

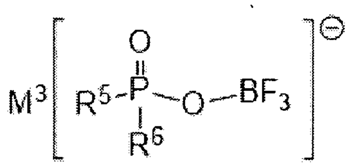

(3)

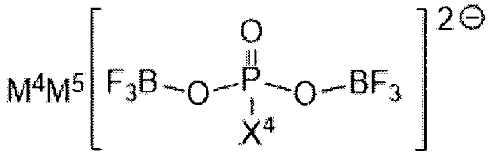

(4)

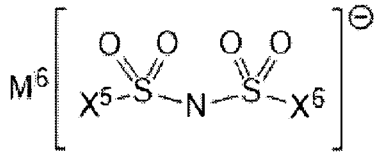

(5)

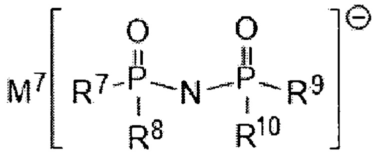

(6)

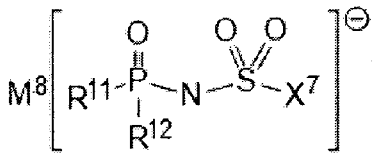

(7)

[In Formulae (2), (3), (6), and (7), $R^3$ to $R^{12}$ are each independently a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond is optionally present in the organic group;

in Formula (4), $X^4$ represents a fluorine atom;

In Formulae (5) and (7), $X^5$ to $X^7$ are each independently a fluorine atom, or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond is optionally present in the organic group, and each of Formulae (2) to (7) includes at least one P-F bond and/or S-F bond; and

in Formulae (2) to (7), $M^2$ to $M^8$ are each independently a proton, a metal cation, or an onium cation.]

[Chem. 11]

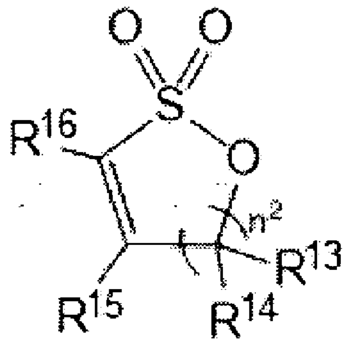

(8)

[In Formula (8), $R^{13}$ to $R^{16}$ are each independently a hydrogen atom, an alkyl group having 1 to 10 carbon atoms, or a fluoroalkyl group having 1 to 10 carbon atoms, and $n^2$ is an integer of 1 to 3.]

[Chem. 12]

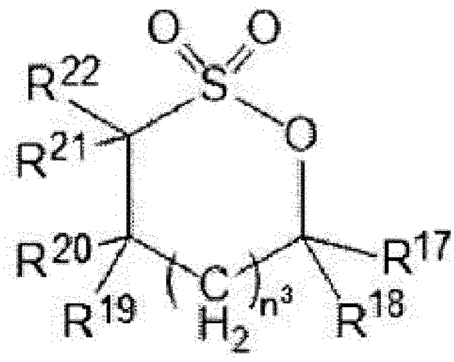

(9)

[In Formula (9), $R^{17}$ to $R^{22}$ are each independently a hydrogen atom, an alkyl group having 1 to 10 carbon atoms, or a fluoroalkyl group having 1 to 10 carbon atoms, and $n^3$ is an integer of 0 to 2.]

When $R^1$ represents an alkylene group having 1 to 10 carbon atoms, the alkylene group having 1 to 10 carbon atoms is not limited, but may be linear or branched, preferably an alkylene group having 1 to 6 carbon atoms, and more preferably an alkylene group having 1 to 2 carbon atoms.

When $R^1$ represents a halogenated alkylene group having 1 to 10 carbon atoms, the halogenated alkylene group having 1 to 10 carbon atoms is not limited, but may be linear or branched, preferably a halogenated alkylene group having 1 to 6 carbon atoms, and more preferably a halogenated alkylene group having 1 to 2 carbon atoms.

The "halogenated alkylene group" is a group in which a part or all of the hydrogen atoms of an alkylene group are substituted with halogen atoms.

Examples of the halogen atom in the halogenated alkylene group having 1 to 10 carbon atoms include a fluorine atom, a chlorine atom, a bromine atom, and an iodine atom.

When $R^1$ represents an arylene group having 6 to 20 carbon atoms, the arylene group having 6 to 20 carbon atoms is not limited, but may be monocyclic or polycyclic, preferably an arylene group having 6 to 15 carbon atoms, and more preferably an arylene group having 6 to 10 carbon atoms.

When $R^1$ represents a halogenated arylene group having 6 to 20 carbon atoms, the halogenated arylene group having 6 to 20 carbon atoms is not limited, but may be monocyclic or polycyclic, preferably a halogenated arylene group having 6 to 15 carbon atoms, and more preferably a halogenated arylene group having 6 to 10 carbon atoms.

The "halogenated arylene group" is a group in which a part or all of the hydrogen atoms of an arylene group are substituted with halogen atoms.

Examples of the halogen atom in the halogenated arylene group having 6 to 20 carbon atoms include a fluorine atom, a chlorine atom, a bromine atom, and an iodine atom.

The group may contain a substituent or a heteroatom in a structure thereof.

In one preferable embodiment, p is 0.

Examples of the halogen atom represented by $R^2$ include a fluorine atom, a chlorine atom, a bromine atom, and an iodine atom.

When $A^{a+}$ represents an alkali metal cation, the alkali metal cation is not limited, but examples thereof include a lithium ion, a sodium ion, and a potassium ion.

When $A^{a+}$ represents an alkaline earth metal cation, the alkaline earth metal cation is not limited, but examples thereof include a magnesium ion and a calcium ion.

When $A^{a+}$ represents an onium cation, the onium cation is not limited, but examples thereof include a tetraalkylammonium ion, a tetraalkylphosphonium ion, an imidazolium ion, and an ammonium ion having a spiro skeleton.

An alkyl group in the tetraalkylammonium ion preferably has 1 to 6 carbon atoms, and an alkyl group in the tetraalkylphosphonium ion preferably has 1 to 6 carbon atoms.

Four alkyl groups in the tetraalkylammonium ion may be the same or different from one another, and four alkyl groups in the tetraalkylphosphonium ion may be the same or different from one another.

The ammonium ion having a spiro skeleton is preferably, for example, 5-azoniaspiro[4.4]nonane.

a to d are each independently 1 or 2, and satisfy $a \times b = c \times d$.

In one preferable embodiment, a to d are 1.

When $R^3$ to $R^{12}$ each independently represent an alkoxy group having 1 to 10 carbon atoms as the organic group, the alkoxy group having 1 to 10 carbon atoms is not limited, but may be linear or branched.

A linear alkoxy group is preferably an alkoxy group having 1 to 6 carbon atoms. An alkoxy group having 1 to 3 carbon atoms is more preferable.

As a branched alkoxy group, an alkoxy group having 3 to 10 carbon atoms is preferable, and an alkoxy group having 3 to 6 carbon atoms is more preferable.

When $R^3$ to $R^{12}$ each independently represent an alkenyloxy group having 2 to 10 carbon atoms as the organic group, the alkenyloxy group having 2 to 10 carbon atoms is not limited, but may be linear or branched, preferably an alkenyloxy group having 2 to 6 carbon atoms, and more preferably an alkenyloxy group having 2 to 3 carbon atoms.

When $R^3$ to $R^{12}$ each independently represent an alkynyloxy group having 2 to 10 carbon atoms as the organic group, the alkynyloxy group having 2 to 10 carbon atoms is not limited, but may be linear or branched, preferably an alkynyloxy group having 2 to 6 carbon atoms, and more preferably an alkynyloxy group having 2 to 3 carbon atoms.

When $R^3$ to $R^{12}$ each independently represent a cycloalkoxy group having 3 to 10 carbon atoms as the organic group, the cycloalkoxy group having 3 to 10 carbon atoms is not limited, but may be monocyclic or polycyclic, preferably a cycloalkoxy group having 3 to 8 carbon atoms, more preferably a cycloalkoxy group having 3 to 6 carbon atoms.

When $R^3$ to $R^{12}$ each independently represent a cycloalkenyloxy group having 3 to 10 carbon atoms as the organic group, the cycloalkenyloxy group having 3 to 10 carbon atoms is not limited, but may be monocyclic or polycyclic, preferably a cycloalkenyloxy group having 3 to 8 carbon atoms, more preferably a cycloalkenyloxy group having 3 to 6 carbon atoms.

When $R^3$ to $R^{12}$ each independently represent an aryloxy group having 6 to 10 carbon atoms as the organic group, the aryloxy group having 6 to 10 carbon atoms is not limited, but may be monocyclic or polycyclic, and examples thereof include a phenyloxy group and a naphthyloxy group.

In Formulae (2), (3), (6), and (7), when $R^3$ to $R^{12}$ each independently represent the organic group selected from the above group, the fluorine atom, the oxygen atom, and/or the unsaturated bond may be present in the organic group.

The expression "when a fluorine atom is present in an organic group" specifically refers to a group in which a hydrogen atom in the above group is substituted with a fluorine atom.

Further, the expression "when an oxygen atom is present in an organic group" specifically refers to a group in which "-O-" (ether bond) is interposed between carbon atoms of the above groups.

When $X^5$ to $X^7$ each independently represent an alkyl group having 1 to 10 carbon atoms as an organic group, the alkyl group having 1 to 10 carbon atoms is not limited, but may be linear or branched.

A linear alkyl group is preferably an alkyl group having 1 to 6 carbon atoms, and more preferably an alkyl group having 1 to 3 carbon atoms.

A branched alkyl group is preferably an alkyl group having 3 to 10 carbon atoms, and more preferably an alkyl group having 3 to 6 carbon atoms.

When $X^5$ to $X^7$ each independently represent an alkenyl group having 2 to 10 carbon atoms as the organic group, the alkenyl group having 2 to 10 carbon atoms is not limited, but may be linear or branched, preferably an alkenyl group having 2 to 6 carbon atoms, and more preferably an alkenyl group having 2 to 3 carbon atoms.

When $X^5$ to $X^7$ each independently represent an alkynyl group having 2 to 10 carbon atoms as the organic group, the alkynyl group having 2 to 10 carbon atoms is not limited, but may be linear or branched, preferably an alkynyl group having 2 to 6 carbon atoms, and more preferably an alkynyl group having 2 to 3 carbon atoms.

When $X^5$ to $X^7$ each independently represent a cycloalkyl group having 3 to 10 carbon atoms as the organic

group, the cycloalkyl group having 3 to 10 carbon atoms is not limited, but may be monocyclic or polycyclic, preferably a cycloalkyl group having 3 to 8 carbon atoms, more preferably a cycloalkyl group having 3 to 6 carbon atoms.

When $X^5$ to $X^7$ each independently represent a cycloalkenyl group having 3 to 10 carbon atoms as the organic group, the cycloalkenyl group having 3 to 10 carbon atoms is not limited, but may be monocyclic or polycyclic, preferably a cycloalkenyl group having 3 to 8 carbon atoms, more preferably a cycloalkenyl group having 3 to 6 carbon atoms.

When $X^5$ to $X^7$ each independently represent an aryl group having 6 to 10 carbon atoms as the organic group, the aryl group having 6 to 10 carbon atoms is not limited, but may be monocyclic or polycyclic, and examples thereof include a phenyl group and a naphthyl group.

When $X^5$ to $X^7$ each independently represent an alkoxy group having 1 to 10 carbon atoms as the organic group, examples of the alkoxy group having 1 to 10 carbon atoms include the same as the case of the alkoxy group having 1 to 10 carbon atoms when $R^3$ to $R^{12}$ described above each independently represent the alkoxy group having 1 to 10 carbon atoms as the organic group, and the preferred ranges are also the same.

When $X^5$ to $X^7$ each independently represent an alkenyloxy group having 2 to 10 carbon atoms as the organic group, examples of the alkenyloxy group having 2 to 10 carbon atoms include the same as the case of the alkenyloxy group having 2 to 10 carbon atoms when $R^3$ to $R^{12}$ described above each independently represent the alkenyloxy group having 2 to 10 carbon atoms as the organic group, and the preferred ranges are also the same.

When $X^5$ to $X^7$ each independently represent an alkynyloxy group having 2 to 10 carbon atoms as the organic group, examples of the alkynyloxy group having 2 to 10 carbon atoms include the same as the case of the alkynyloxy group having 2 to 10 carbon atoms when $R^3$ to $R^{12}$ described above each independently represent the alkynyloxy group having 2 to 10 carbon atoms as the organic group, and the preferred ranges are also the same.

When $X^5$ to $X^7$ each independently represent an cycloalkoxy group having 3 to 10 carbon atoms as the organic group, examples of the cycloalkoxy group having 3 to 10 carbon atoms include the same as the case of the cycloalkoxy group having 3 to 10 carbon atoms when $R^3$ to $R^{12}$ described above each independently represent the cycloalkoxy group having 3 to 10 carbon atoms as the organic group, and the preferred ranges are also the same.

When $X^5$ to $X^7$ each independently represent an cycloalkenyloxy group having 3 to 10 carbon atoms as the organic group, examples of the cycloalkenyloxy group having 3 to 10 carbon atoms include the same as the case of the cycloalkenyloxy group having 3 to 10 carbon atoms when $R^3$ to $R^{12}$ described above each independently represent the cycloalkenyloxy group having 3 to 10 carbon atoms as the organic group, and the preferred ranges are also the same.

When $X^5$ to $X^7$ each independently represent an aryloxy group having 6 to 10 carbon atoms as the organic group, examples of the aryloxy group having 6 to 10 carbon atoms include the same as the case of the aryloxy group having 6 to 10 carbon atoms when $R^3$ to $R^{12}$ described above each independently represent the aryloxy group having 6 to 10 carbon atoms as the organic group, and the preferred ranges are also the same.

In Formulae (5) and (7), when $X^5$ to $X^7$ each independently represent the organic group selected from the above group, the fluorine atom, the oxygen atom, and/or the unsaturated bond may be present in the organic group.

The expression "when a fluorine atom is present in an organic group" specifically refers to a group in which a hydrogen atom in the above group is substituted with a fluorine atom.

Further, the expression "when an oxygen atom is present in an organic group" specifically refers to a group in which "-O-" (ether bond) is interposed between carbon atoms of the above groups.

$M^2$ to $M^8$ are each independently a proton, a metal cation, or an onium cation. $M^2$ to $M^8$ are each independently typically a monovalent cation.

When $M^2$ to $M^8$ each independently represent a metal cation, the metal cation is not limited, but examples thereof include an alkali metal cation, such as a lithium ion, a sodium ion, and a potassium ion.

When $M^2$ to $M^8$ each independently represent an onium cation, the onium cation is not limited, but examples thereof include a tetraalkylammonium ion, a tetraalkylphosphonium ion, an imidazolium ion, and an ammonium ion having a spiro skeleton.

An alkyl group in the tetraalkylammonium ion preferably has 1 to 6 carbon atoms, and an alkyl group in the tetraalkylphosphonium ion preferably has 1 to 6 carbon atoms.

Four alkyl groups in the tetraalkylammonium ion may be the same or different from one another, and four alkyl groups in the tetraalkylphosphonium ion may be the same or different from one another.

The ammonium ion having a spiro skeleton is preferably, for example, 5-azoniaspiro[4.4]nonane.

In Formula (8), when $R^{13}$ to $R^{16}$ each independently represent an alkyl group having 1 to 10 carbon atoms, the alkyl group having 1 to 10 carbon atoms is not limited, but may be linear or branched.

A linear alkyl group is preferably an alkyl group having 1 to 6 carbon atoms, and more preferably an alkyl group having 1 to 3 carbon atoms.

A branched alkyl group is preferably an alkyl group having 3 to 10 carbon atoms, and more preferably an alkyl group having 3 to 6 carbon atoms.

When $R^{13}$ to $R^{16}$ each independently represent a fluoroalkyl group having 1 to 10 carbon atoms, the fluoroalkyl group having 1 to 10 carbon atoms is not limited, but may be linear or branched. The "fluoroalkyl group" is a group in

which a part or all of the hydrogen atoms of an alkyl group are substituted with fluorine atoms.

A linear fluoroalkyl group is preferably a fluoroalkyl group having 1 to 6 carbon atoms, and more preferably a fluoroalkyl group having 1 to 3 carbon atoms.

A branched fluoroalkyl group is preferably a fluoroalkyl group having 3 to 10 carbon atoms, and more preferably a fluoroalkyl group having 3 to 6 carbon atoms.

The alkyl group having 1 to 10 carbon atoms and the fluoroalkyl group having 1 to 10 carbon atoms may have a substituent.

In Formula (9), when $R^{17}$ to $R^{22}$ each independently represent an alkyl group having 1 to 10 carbon atoms, examples of the alkyl group having 1 to 10 carbon atoms include the same as the case of the alkyl group having 1 to 10 carbon atoms when $R^{13}$ to $R^{16}$ described above each independently represent the alkyl group having 1 to 10 carbon atoms, and the preferred ranges are also the same.

When $R^{17}$ to $R^{22}$ each independently represent a fluoroalkyl group having 1 to 10 carbon atoms, examples of the fluoroalkyl group having 1 to 10 carbon atoms include the same as the case of the fluoroalkyl group having 1 to 10 carbon atoms when $R^{13}$ to $R^{16}$ described above each independently represent the fluoroalkyl group having 1 to 10 carbon atoms, and the preferred ranges are also the same.

The compound represented by the Formula (1) is preferably at least one selected from the group consisting of $NaBF_2(C_2O_4)$, $NaPF_4(C_2O_4)$, $NaPF_2(C_2O_4)_2$, and $NaP(C_2O_4)_3$.

The compound represented by the Formula (2) is preferably at least one selected from the group consisting of compounds in which $R^3$ and $R^4$ are each independently a fluorine atom, a methoxy group, an ethoxy group, or a propargyloxy group, and $M^2$ is a lithium ion, a sodium ion, a potassium ion, or a tetraalkylammonium ion.

The compound represented by the Formula (3) is preferably at least one selected from the group consisting of compounds in which $R^5$ and $R^6$ are each independently a fluorine atom, a methoxy group, or an ethoxy group, and $M^3$ is a lithium ion, a sodium ion, a potassium ion, or a tetraalkylammonium ion.

The compound represented by the Formula (4) is preferably at least one selected from the group consisting of compounds in which $M^4$ and $M^5$ are each independently a lithium ion, a sodium ion, a potassium ion, or a tetraalkylammonium ion.

The compound represented by the Formula (5) is preferably at least one selected from the group consisting of $LiN(SO_2F)_2$, $LiN(SO_2F)(SO_2CF_3)$, $NaN(SO_2F)_2$, $NaN(SO_2F)(SO_2CF_3)$, $KN(SO_2F)_2$, and $KN(SO_2F)(SO_2CF_3)$.

The compound represented by the Formula (6) is preferably at least one selected from the group consisting of $LiN(POF_2)_2$, $LiN(POF_2)(PO(OCH_3)_2)$, $NaN(POF_2)_2$, $NaN(POF_2)(PO(OCH_3)_2)$, $KN(POF_2)_2$, and $KN(POF_2)(PO(OCH_3)_2)$.

The compound represented by the Formula (7) is preferably at least one selected from the group consisting of $LiN(POF_2)(SO_2F)$, $LiN(PO(OCH_3)_2)(SO_2F)$, $NaN(POF_2)(SO_2F)$, $NaN(PO(OCH_3)_2)(SO_2F)$, $KN(POF_2)(SO_2F)$, and $KN(PO(OCH_3)_2)(SO_2F)$.

The compound represented by the Formula (8) is preferably at least one selected from the group consisting of 1,3-propene sultone, 1,4-butene sultone, and 2-methyl-1,3-propene sultone.

The compound represented by the Formula (9) is preferably at least one selected from the group consisting of 1,3-propane sultone, 1,4-butane sultone, 1-methyl-1,3-propane sultone, and 3-methyl-1,3-propane sultone.

A content y of the component (II) is not limited, but is preferably 0.01 mass% or more, more preferably 0.03 mass% or more, still more preferably 0.1 mass% or more, and yet still more preferably 0.8 mass% or more with respect to the total amount of the electrolyte solution for a nonaqueous sodium ion battery. Further, the content y of the component (II) is not limited, but is preferably 10.0 mass% or less, more preferably 8.0 mass% or less, still more preferably 5.0 mass% or less, yet still more preferably 3.5 mass% or less, and particularly preferably 2.5 mass% or less with respect to the total amount of the electrolyte solution for a nonaqueous sodium ion battery. When the content y is 0.01 mass% or more, at least one of the cycle characteristic of the nonaqueous sodium ion battery at the high temperature of 60°C or higher, (the effect of preventing) the gas generation amount during the high-temperature cycle test, and the high-temperature storage characteristic can be improved. Further, when the content y is 10.0 mass% or less, the film formed on the electrode does not become too thick, and this hardly leads to an increase in resistance.

One type of these components (II) may be used alone, or two or more types thereof may be mixed and used in any combination and any proportion according to an application.

In one aspect, the content y of the component (II) preferably satisfies 0.01 mass% $<$ y $<$ 10.0 mass%, more preferably satisfies 0.03 mass% $<$ y $<$ 8.0 mass%, still more preferably satisfies 0.1 mass% $<$ y $<$ 5.0 mass%, yet still more preferably satisfies 0.1 mass% $<$ y $<$ 3.5 mass%, and particularly preferably satisfies 0.8 mass% $\leq$ y $<$ 2.5 mass% with respect to the total amount of the electrolyte solution for a nonaqueous sodium ion battery.

[(III) Sodium Salt]

A type of a sodium salt of a solute is not limited, and any sodium salt (excluding the fluorosulfate) can be used. Specific examples thereof include an electrolyte solution sodium salt represented by at least one selected from the group

consisting of $NaPF_6$, $NaBF_4$, $NaBF_2(C_2O_4)$, $NaPF_4(C_2O_4)$, $NaPF_2(C_2O_4)_2$, $NaSbF_6$, $NaAsF_6$, $NaClO_4$, $NaN(SO_2F)_2$, $NaN(SO_2CF_3)_2$, $NaN(SO_2F)(SO_2CF_3)$, $NaN(C_aF_{2a+1}SO_2)(C_bF_{2b+1}SO_2)$ (in which a and b are integers satisfying $2 < a < 20$ and $2 < b < 20$), $NaSO_3CF_3$,$NaSO_3C_4F_9$, $NaN(POF_2)_2$, $NaN(POF_2)(SO_2F)$, $NaPO_2F_2$, $NaC(SO_2CF_3)_3$, $NaPF_3(C_3F_7)_3$, $NaB(CF_3)_4$, $NaBF_3(C_2F_5)$, $NaAlO_2$, $NaAlCl_a$, NaCl, and NaI. One type of these solutes may be used alone, or two or more types thereof may be mixed and used in any combination and any proportion according to an application. Among them, in view of energy density, output characteristics, life, and the like of the battery, $NaPF_6$, $NaBF_2(C_2O_4)$, $NaPF_4(C_2O_4)$, $NaPF_2(C_2O_4)_2$, $NaN(SO_2F)_2$, $NaN(SO_2CF_3)_2$, $NaN(SO_2C_2F_5)_2$, $NaN(POF_2)_2$, $NaN(POF_2)(SO_2F)$, and $NaPO_2F_2$ are preferred, $NaPF_6$ and $NaN(SO_2F)_2$ are more preferred, and $NaPF_6$ is even more preferred.

In one preferable embodiment, the electrolyte solution for a nonaqueous sodium ion battery contains $NaPF_6$ as the (III) sodium salt.

A concentration z of the sodium salt in the electrolyte solution for a nonaqueous sodium ion battery according to the present embodiment is not limited, but is preferably 0.05 mol/L or more, more preferably 0.3 mol/L or more, and still more preferably 0.8 mol/L or more, and is preferably 5.0 mol/L or less, more preferably 2.0 mol/L or less, and still more preferably 1.5 mol/L or less with respect to the total amount of the electrolyte solution for a nonaqueous sodium ion battery.

Setting the concentration to 0.05 mol/L or more allows for facilitating prevention of deterioration of a cycle characteristic of the nonaqueous sodium ion battery due to a decrease in ionic conductivity. And, setting the concentration to 5.0 mol/L or less allows for facilitating prevention of an increase in viscosity of the electrolyte solution for a nonaqueous sodium ion battery and an accompanying decrease in battery characteristic due to the decrease in ionic conductivity.

One type of these components (III) may be used alone, or two or more types thereof may be mixed and used in any combination and any proportion according to an application.

In one aspect, the concentration z of the component (III) preferably satisfies $0.3\ mol/L < z \leq 5.0\ mol/L$, more preferably satisfies $0.4\ mol/L < z < 3.0\ mol/L$, still more preferably satisfies $0.5\ mol/L < z < 2.0\ mol/L$, and particularly preferably satisfies $0.8\ mol/L < z \leq 1.5\ mol/L$ with respect to the total amount of the electrolyte solution for a nonaqueous sodium ion battery.

Some of the (III) sodium salt may overlap with some of the component (II), but when a content of the overlap is a predetermined amount or more (the concentration of the (III) sodium salt in the electrolyte solution for a nonaqueous sodium ion battery is 0.3 mol/L or more with respect to the total amount of the electrolyte solution for a nonaqueous sodium ion battery), the overlap works as a main electrolyte solution ((III) sodium salt), and when the content is less than the predetermined amount, the overlap works as an additive (component (II)).

Here, the component (II) is a compound different from the (III) sodium salt.

For example, when the (III) sodium salt is $NaBF_2(C_2O_4)$, the component (II) is a compound other than $NaBF_2(C_2O_4)$.

[(IV) Nonaqueous Solvent]

A type of the nonaqueous solvent is not limited, and any nonaqueous solvent can be used. Specific examples thereof include the following nonaqueous solvents.

Examples of a cyclic ester include cyclic carbonates (excluding vinylene carbonate) such as ethylene carbonate, propylene carbonate, and butylene carbonate, $\gamma$-butyrolactone, and $\gamma$-valerolactone.

Examples of a chain ester include chain carbonates such as dimethyl carbonate, diethyl carbonate, and ethyl methyl carbonate, methyl acetate, ethyl acetate, methyl propionate, and ethyl propionate.

Examples of a cyclic ether include tetrahydrofuran, 2-methyltetrahydrofuran, 1,3-dioxolane, 2-methyl-1,3-dioxolane, 4-methyl-1,3-dioxolane, 1,3-dioxane, and the like.

Examples of a chain ether include dimethoxyethane, diethoxyethane, diethyl ether, ethoxy-methoxy ethane, diethylene glycol dimethyl ether, triethylene glycol dimethyl ether, tetraethylene glycol dimethyl ether, dipropylene glycol dimethyl ether, and the like.

Examples of a sulfur-containing nonaqueous solvent include dimethyl sulfoxide and sulfolane.

Further, one type of these nonaqueous solvents used in the present embodiment may be used alone, or two or more types thereof may be mixed and used in any combination and any proportion according to an application.

In one preferable embodiment, the electrolyte solution for a nonaqueous sodium ion battery contains, as the nonaqueous solvent, at least one selected from the group consisting of a cyclic ester, a chain ester, a cyclic ether, and a chain ether.

In one preferable embodiment, the electrolyte solution for a nonaqueous sodium ion battery contains the cyclic ester as the nonaqueous solvent, and the cyclic ester is a cyclic carbonate. Further, in one preferable embodiment, the electrolyte solution for a nonaqueous sodium ion battery contains the chain ester as the nonaqueous solvent, and the chain ester is a chain carbonate.

The electrolyte solution for a nonaqueous sodium ion battery more preferably contains at least one selected from the group consisting of ethylene carbonate, propylene carbonate, butylene carbonate, dimethyl carbonate, diethyl carbonate, ethyl methyl carbonate, γ-butyrolactone, methyl acetate, ethyl acetate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether as the nonaqueous solvent.

One type of these nonaqueous solvents may be used alone, or two or more types thereof may be mixed and used in any combination and any proportion according to an application.

[Other Additives]

The electrolyte solution for a nonaqueous sodium ion battery according to the present embodiment may contain other additives typically used in the electrolyte solution for a nonaqueous sodium ion battery at any proportion without departing from the gist of the present disclosure. Specific examples thereof include compounds having an overcharge prevention effect, a negative electrode film-forming effect, and a positive electrode protection effect, such as cyclohexylbenzene, biphenyl, t-butyl benzene, t-amyl benzene, fluorobenzene, a vinylene carbonate oligomer (in which a number average molecular weight is 170 to 5,000. Here, the number average molecular weight is a number average molecular weight in terms of standard polystyrene measured by gel permeation chromatography (GPC) using tetrahydrofuran (THF) as a solvent. The same definition applies hereinafter.), vinyl ethylene carbonate, difluoroanisole, fluoroethylene carbonate, 1,6-diisocyanatohexane, ethynylethylene carbonate, trans-difluoroethylene carbonate, dimethylvinylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, succinonitrile, (ethoxy)pentafluorocyclotriphosphazene, methane sulfonyl fluoride, tetrafluoro(picolinato)phosphate, and 1,3-dimethyl-1,3-divinyl-1,3-di(1,1,1,3,3,3-hexafluoroisopropyl)disiloxane.

Among them, at least one compound selected from the group consisting of cyclohexylbenzene, t-butyl benzene, t-amyl benzene, fluorobenzene, a vinylene carbonate oligomer (in which a number average molecular weight is 170 to 5,000), vinyl ethylene carbonate, fluoroethylene carbonate, 1,6-diisocyanatohexane, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, succinonitrile, (ethoxy)pentafluorocyclotriphosphazene, methane sulfonyl fluoride, tetrafluoro(picolinato)phosphate, and 1,3-dimethyl-1,3-divinyl-1,3-di(1,1,1,3,3,3-hexafluoroisopropyl)disiloxane is preferred, and vinyl ethylene carbonate, trans-difluoroethylene carbonate, or 1,2-ethanedisulfonic anhydride is more preferred.

When the electrolyte solution for a nonaqueous sodium ion battery according to the present embodiment contains fluoroethylene carbonate, the content thereof is preferably not too large from the viewpoint of gas generation, and fluoroethylene carbonate may not be substantially contained. "Not be substantially contained" means "less than 0.001 mass% with respect to the total amount of the electrolyte solution".

In one preferable embodiment, the electrolyte solution for a nonaqueous sodium ion battery according to the present embodiment does not contain fluoroethylene carbonate.

When the electrolyte solution for a nonaqueous sodium ion battery according to the present embodiment contains 1,3,2-dioxathiolane-2,2-dioxide and/or 4-propyl-1,3,2-dioxathiolane-2,2-dioxide, a content thereof is preferably not too large from the viewpoint of storage stability, and when the electrolyte solution for a nonaqueous sodium ion battery contains 1,3,2-dioxathiolane-2,2-dioxide and/or 4-propyl-1,3,2-dioxathiolane-2,2-dioxide, a content thereof is preferably not too large from the viewpoint of storage stability, and may not be substantially contained.

In one preferable embodiment, the electrolyte solution for a nonaqueous sodium ion battery according to the present embodiment does not contain 1,3,2-dioxathiolane-2,2-dioxide and/or 4-propyl-1,3,2-dioxathiolane-2,2-dioxide.

When the electrolyte solution for a nonaqueous sodium ion battery according to the present embodiment contains the above other additives, the electrolyte solution for a nonaqueous sodium ion battery contains the other additives in an amount of preferably 0.01 mass% or more and 10 mass% or less with respect to the total amount of the electrolyte solution.

The above sodium salt (a sodium salt other than the sodium salt used as the solute (excluding those corresponding to the components (1) and (II))) can also be used as another additive.

When the sodium salt is used as the other additive, the electrolyte solution for a nonaqueous sodium ion battery contains the other additives in an amount of preferably 0.3 mass% or more and 1.5 mass% or less with respect to the total amount of the electrolyte solution.

The other additive may be a gelling agent or a crosslinked polymer. The electrolyte solution for a nonaqueous sodium ion battery according to the present embodiment can also be pseudo-solidified with the gelling agent or the crosslinked polymer, and the pseudo-solidified one is suitable, for example, for a sodium polymer battery.

[Nonaqueous Sodium Ion Battery]

Next, a configuration of the nonaqueous sodium ion battery according to one embodiment of the present invention will be described.

The nonaqueous sodium ion battery includes at least a positive electrode, a negative electrode, and the electrolyte solution for a nonaqueous sodium ion battery according to the present embodiment.

The nonaqueous sodium ion battery according to the present embodiment is characterized in that the electrolyte solution for a nonaqueous sodium ion battery according to the present embodiment is used, and for the other components, the nonaqueous sodium ion battery uses usual members to be used in a general nonaqueous sodium ion battery. That is, the other components include a positive electrode and a negative electrode capable of occluding and discharging sodium, a current collector, a separator, an exterior body, and the like.

[Positive Electrode]

A positive electrode material (positive electrode active material) is not limited, but examples thereof include sodium-containing transition metal composite oxides such as $NaCrO_2$, NaFeo.sCoo.sOz, $NaFe_{0.4}Mn_{0.3}Ni_{0.3}O_2$, $NaNi_{0.5}Ti_{0.3}Mn_{0.2}O_2$, $Na_{2/3}Ni_{1/3}Ti_{1/6}Mn_{1/2}O_2$, and $Na_{2/3}Ni_{1/3}Mn_{2/3}O_2$, these sodium-containing transition metal composite oxides in which a plurality of transition metals such as Co, Mn, and Ni are mixed, sodium-containing transition metal composite oxides in which a part of the transition metals of these sodium-containing transition metal composite oxides is replaced with other metals other than the transition metals, polyanion type compounds such as $NaFePO_4$, $NaVPO_4F$, $Na_3V_2(PO_4)_3$, and $Na_2Fe_2(SO_4)_3$, oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like.

In the positive electrode, for example, a positive electrode active material layer is formed on at least one surface of a positive electrode current collector. The positive electrode active material layer includes, for example, the positive electrode active material described above, a binder, and, if necessary, an electrically conductive agent. Examples of the binder include polytetrafluoroethylene, polyvinylidene fluoride, and a styrenebutadiene rubber (SBR) resin. As the electrically conductive agent, for example, carbon materials such as acetylene black, Ketjen black, carbon fiber, or graphite (granular graphite or flake graphite) can be used, and acetylene black or Ketjen black having low crystallinity is preferably used.

[Negative Electrode]

A negative electrode material (negative electrode active material) is not limited, but examples thereof include sodium metal and materials capable of occluding and discharging sodium ions. For example, sodium metal, an alloy of sodium metal and other metals such as tin, an intermetallic compound, various carbon materials such as hard carbon, a metal oxide such as titanium oxide, a metal nitride, (elemental) tin, a tin compound, activated carbon, a conductive polymer, and the like are used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like are used. One type of these negative electrode active materials may be used alone, or two or more types thereof may be used in combination.

In the negative electrode, for example, a negative electrode active material layer is formed on at least one surface of a negative electrode current collector. The negative electrode active material layer includes, for example, the negative electrode active material described above, a binder, and, if necessary, an electrically conductive agent. Examples of the binder include polytetrafluoroethylene, polyvinylidene fluoride, and a styrenebutadiene rubber (SBR) resin. As the electrically conductive agent, for example, carbon materials such as acetylene black, Ketjen black, carbon fiber, or graphite (granular graphite or flake graphite) can be used.

[Current Collector]

For the current collectors of the positive electrode and the negative electrode, copper, aluminum, stainless steel, nickel, titanium, alloys thereof, or the like can be used. An active material layer is formed on at least one surface of the current collector.

[Separator]

As the separator for preventing contact between the positive electrode and the negative electrode, a nonwoven fabric, a porous sheet, or a film made of polyolefin (for example, polypropylene and polyethylene), paper, glass fiber, or

the like is used. These are preferably microporous so that the electrolyte solution permeates and ions easily permeate.

[Exterior Body]

As the exterior body, for example, a metal can having a coin shape, a cylindrical shape, a square shape, or the like, or a laminated exterior body can be used. Metal can materials include, for example, nickel-plated steel plates, stainless steel plates, nickel-plated stainless steel plates, aluminum or alloys thereof, nickel, and titanium. As the laminated exterior body, for example, an aluminum laminated film, a SUS laminated film, a silica-coated polypropylene or polyethylene laminated film, or the like can be used.

The configuration of the nonaqueous sodium ion battery according to the present embodiment is not limited, but for example, can be a configuration in which an electrode element including the positive electrode and the negative electrode arranged to face each other and a nonaqueous electrolyte solution can be included in the exterior body. Further, a shape of the nonaqueous sodium ion battery according to the present embodiment is not limited, but may have a coin shape, a cylindrical shape, a square shape, or an aluminum laminate sheet shape.

The present invention also relates to a method for producing the nonaqueous sodium ion battery.

The production method is a method for producing the nonaqueous sodium ion battery, and includes:

preparing an electrolyte solution for a nonaqueous sodium ion battery according to the present disclosure; and filling an empty cell including at least a positive electrode and a negative electrode with the above electrolyte solution for a nonaqueous sodium ion battery.

EXAMPLES

Hereinafter, the present disclosure will be specifically described with reference to examples, but the present disclosure is not limited to these examples.

[Preparation of Electrolyte Solution for Nonaqueous Sodium Ion Battery]

(Preparation of Electrolyte Solution No. $NaSO_3F$(2.0)-$PF_4$(1.0))

A mixed solvent in which propylene carbonate (hereinafter, also referred to as "PC"), ethylene carbonate (hereinafter, also referred to as "EC"), and ethyl methyl carbonate (hereinafter, also referred to as "EMC") were mixed at a volume proportion of PC:EC:EMC = 30:20:50 was used as the (IV) nonaqueous solvent, and in the solvent, $NaPF_6$ as the (III) sodium salt, sodium fluorosulfate (hereinafter, also referred to as "$NaSO_3F$") as the (I) fluorosulfate, and NaPFa(CzOa) as the (II) were dissolved at concentrations shown in Table 1, thereby preparing an electrolyte solution No. $NaSO_3F$(2.0)-$PF_4$(1.0). The above preparation was performed with a liquid temperature maintained in a range of 20°C to 30°C.

In each of Tables 1, 16, 18, 20, and 22 below, concentrations (mass%) of the (1) fluorosulfate, the component (II), and the other additive represent contents (mass%) relative to the total amount of the electrolyte solution for a nonaqueous sodium ion battery.

In each of Tables 1, 16, 18, 20, and 22 below, a concentration (mol/L) of the (III) sodium salt represents a concentration relative to the total amount of the electrolyte solution for a nonaqueous sodium ion battery.

[Table 1]

Table 1

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| NaS0$_3$F(2.0)-$PF_4$ (1.0) | $NaSO_3F$ | 2.0 | $NaPF_4$ $(C_2O_4)$ | 1.0 | | | | | |
| $NaSO_3F$(2.0)-$PF_2$ (1.0) | | | $NaPF_2$ $(C_2O_4)_2$ | 1.0 | | | | | |
| $NaSO_3F$(2.0)-$BF_2$ (1.0) | | | $NaBF_2$ $(C_2O_4)$ | 1.0 | | | | | |
| $NaSO_3F$ (2.0)-$PO_2F_2$(0.5) | | | $NaPO_2F_2$ | 0.5 | | | | | |
| $NaSO_3F$(2.0)-B-$PO_2F_2$(1.0) | | | $NaBF_3$ $(PO_2F_2)$ | 1.0 | | | | | |
| $NaSO_3F$ (2.0)-$B_2$-$PO_3F$(1.0) | | | $Na_2[(BF_3)_2(PO_3F)]$ | 1.0 | | | | | |
| $NaSO_3F$(2.0)-FSI (3.0) | | | $NaN(SO_2F)_2$ | 3.0 | | | | | |
| $NaSO_3F$(2.0)-N $(POF_2)_2$(1.0) | | | $NaN(POF_2)_2$ | 1.0 | | | | | |
| $NaSO_3F$(2.0)-N $(POF_2)(SO_2F)$(1.5) | | | $NaN(POF_2)(SO_2F)$ | 1.5 | | | | | |
| $NaSO_3F$(2.0)-PRS (0.5) | | | PRS | 0.5 | | | | | |

(continued)

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| $NaSO_3F$(2.0)-PS (1.0) | | | PS | 1.0 | $NaPF_6$ | 1.0 | PC/EC/EMC 30/20/50 (vol%) | None | - |
| $NaSO_3F$(2.0)-VC (1.0) | | | VC | 1.0 | | | | | |
| $NaSO_3F$(2.0)-TMSB (1.0) | | | TMSB | 1.0 | | | | | |
| $NaSO_3F$(2.0)-TMSP (1.0) | | | TMSP | 1.0 | | | | | |
| $NaSO_3F$(2.0)-non | | | None | - | | | | | |
| non-$PF_4$(1.0) | None | - | $NaPF_4$ $(C_2O_4)$ | 1.0 | | | | | |
| non-$PF_2$(1.0) | | | $NaPF_2$ $(C_2O_4)_2$ | 1.0 | | | | | |
| non-$BF_2$(1.0) | | | $NaBF_2$ $(C_2O_4)$ | 1.0 | | | | | |
| non-$PO_2F_2$(0.5) | | | $NaPO_2F_2$ | 0.5 | | | | | |
| non-B-$PO_2F_2$(1.0) | | | $NaBF_3$ $(PO_2F_2)$ | 1.0 | | | | | |
| non-$B_2$-$PO_3F$(1.0) | | | $Na_2[(BF_3)_2(PO_3F)]$ | 1.0 | | | | | |

(continued)

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| non-FSI(3.0) | | | $NaN(SO_2F)_2$ | 3.0 | | | | | |
| non-$N(POF_2)_2$(1.0) | | | $NaN(POF_2)_2$ | 1.0 | | | | | |
| non-$N(POF_2)(SO_2F)$(1.5) | | | $NaN(POF_2)(SO_2F)$ | 1.5 | | | | | |
| non-PRS(0.5) | | | PRS | 0.5 | | | | | |
| non-PS(1.0) | | | PS | 1.0 | | | | | |
| non-VC(1.0) | | | VC | 1.0 | | | | | |
| non-TMSB(1.0) | | | TMSB | 1.0 | | | | | |
| non-TMSP(1.0) | | | TMSP | 1.0 | | | | | |
| non-non | | | None | - | | | | | |

(Preparation of Other Electrolyte Solutions according to Table 1)

Various electrolyte solutions shown in Table 1 were prepared in the same manner as the electrolyte solution No. $NaS0_3F$(2.0)-$PF_4$(1.0) except that the concentration of (1), and the type and the concentration of (II) were changed to those shown in Table 1. Abbreviations in the tables are as follows.

$PF_4$: $NaPF_4(C_2O_4)$
$PF_2$: $NaPF_2(C_2O_4)_2$
$BF_2$: $NaBF_2(C_2O_4)$
$PO_2F_2$: $NaPO_2F_2$
B-$PO_2F_2$: $NaBF_3(PO_2F_2)$
$B_2$-$PO_3F$: $Na_2(BF_3)_2(PO_3F)$
FSI: $NaN(SO_2F)_2$
$N(POF_2)_2$: $NaN(POF_2)_2$
$N(POF_2)(SO_2F)$: $NaN(POF_2)(SO_2F)$
PRS: 1,3-propene sultone
PS: 1,3-propane sultone
VC: vinylene carbonate
TMSB: tris(trimethylsilyl)borate
TMSP: tris(trimethylsilyl)phosphate

[Example 1-1 and Comparative Examples 1-0 to 1-2]

A high-temperature cycle test was performed on each test cell prepared using an electrolyte solution shown in Table 2 as a test electrolyte solution, $NaNi_{0.5}Ti_{0.3}Mn_{0.2}O_2$ as a positive electrode material, and hard carbon (Carbotron P manufactured by KUREHA CORPORATION) as a negative electrode material, and a cycle characteristic, a gas generation amount during the high-temperature cycle test, and a high-temperature storage characteristic were evaluated. Evaluation results are shown in Table 2. The test cell was prepared as follows.

A test positive electrode was prepared by the following procedure.

A slurry solution was prepared by mixing 90 mass% of $NaNi_{0.5}Ti_{0.3}Mn_{0.2}O_2$ as the positive electrode active material, 5 mass% of acetylene black as the electrically conductive agent, and 5 mass% of polyvinylidene fluoride (PVDF) as the binder, and further adding N-methylpyrrolidone as the solvent in an amount of 50 mass% with respect to a total mass of the positive electrode active material, the electrically conductive agent, and the binder. The slurry solution was applied onto an aluminum foil as the positive electrode current collector and dried at 150°C for 12 hours to obtain the test positive electrode including a positive electrode active material layer formed on the current collector.

A test negative electrode was prepared by the following procedure.

A slurry solution was prepared by mixing 90 mass% of a hard carbon powder (Carbotron P manufactured by KUREHA CORPORATION) as the negative electrode active material and 10 mass% of polyvinylidene fluoride (PVDF) as the binder, and further adding N-methylpyrrolidone as the solvent in an amount of 50 mass% with respect to a total mass of the negative electrode active material and the binder. The slurry solution was applied onto an aluminum foil as the negative electrode current collector and dried at 150°C for 12 hours to obtain the test negative electrode including a negative electrode active material layer formed on the current collector.

The test positive electrode and the test negative electrode were placed via a polyethylene separator impregnated with the test electrolyte solution, and a test cell for 50 mAh having an aluminum laminate exterior was assembled.

[Evaluation of High-temperature Cycle Characteristic]

The test cell was charged and discharged at current density of 0.32 $mA/cm^2$ by a constant-current constant-voltage method at an environmental temperature of 25°C with an upper limit of the charge voltage of 4.1 V and a lower limit of the discharge voltage of 1.5 V, and then a charge and discharge test at an environmental temperature of 60°C was performed to evaluate the cycle characteristic. The cell was charged to 4.1 V and discharged to 1.5 V, and the charge-discharge cycle was repeated at current density of 1.56 $mA/cm^2$. Further, a degree of deterioration of the cell was evaluated with the discharge capacity maintenance rate at a 500th cycle in the charge and discharge test at the environmental temperature of 60°C. A "discharge capacity maintenance rate after a high-temperature cycle" represented by the discharge capacity maintenance rate at the 500th cycle was obtained by the following formula. A discharge capacity at a first cycle in the charge and discharge test at the environmental temperature of 60°C was defined as an initial discharge capacity.

Discharge capacity maintenance rate after high-temperature cycle (%) = (discharge capacity at 500th cycle/initial discharge capacity) x 100

[Evaluation of Gas Generation Amount]

Before and after the evaluation of the high-temperature cycle characteristic, a volume of the cell was measured by Archimedes method using silicone oil (silicone oil KF54, manufactured by Shin-Etsu Chemical Co., Ltd.), and a gas generation amount V (unit: $cm^3$) (gas generation amount V = volume V2 of cell after evaluation of high-temperature cycle characteristic - volume VI of cell before evaluation of high-temperature cycle characteristic) was obtained. Based on the gas generation amount V, a "gas generation amount during the high-temperature cycle" was evaluated.

[Evaluation of High-temperature Storage Characteristic]

The test cell was charged to an upper limit charge voltage of 4.1 V at a current density of 0.32 $mA/cm^2$ by a constant-current constant-voltage method at an environmental temperature of 25°C, and then discharged to 1.5 V at a constant current of 0.32 $mA/cm^2$. The same charge and discharge cycle was repeated 10 times. A discharge capacity at a 10th cycle is defined as an "initial discharge capacity". Thereafter, the test cell was charged to an upper limit charge voltage of 4.1 V at a current density of 0.32 $mA/cm^2$ by the constant-current constant-voltage method at an environmental temperature of 25°C. The test cell was stored at 60°C for 4 weeks, and after cooling the battery to 25°C, the test cell was discharged to 1.5 V at a constant current of 0.32 $mA/cm^2$ at an environmental temperature of 25°C. The test cell was charged to an upper limit charge voltage of 4.1 V at a current density of 0.32 $mA/cm^2$ by the constant-current constant-voltage method, and then discharged to 1.5 V at a constant current of 0.32 $mA/cm^2$. A discharge capacity at this time is defined as a "recovery capacity". A "recovery discharge capacity maintenance rate after high-temperature storage" was determined by the following formula.

<Recovery Discharge Capacity Maintenance Rate after High-temperature Storage>

Recovery discharge capacity maintenance rate after high-temperature storage (%) = (recovery capacity/initial discharge capacity) × 100

[Table 2]

Table 2

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-2 | non-$PF_4$ (1.0) | | | 110 | 99 | 103 |
| Example 1-1 | $NaS0_3F$ (2.0)-$PF_4$ (1.0) | | | 140 | 36 | 115 |

Evaluation results of Example and Comparative Examples shown in Table 2 are relative values with an evaluation result of Comparative Example 1-0 as 100%. Further, the same applies to all the following tables.

A larger value for the "discharge capacity maintenance rate after a high-temperature cycle" is desirable, a larger value for the "recovery discharge capacity maintenance rate after high-temperature storage" is desirable, and a smaller value for the "gas generation amount during the high-temperature cycle" is desirable.

From the evaluation results in Table 2, it was found that the discharge capacity maintenance rate after the high-temperature cycle was further improved by containing both the (I) and the (II) in the nonaqueous electrolyte solution (Example 1-1) compared to a result of simply adding up an addition effect in the case of containing only the (1) (Comparative Example 1-1) and an addition effect in the case of containing only the (II) (Comparative Example 1-2) (FIG. 1).

Further, it was found that the effect of preventing the gas generation amount during the high-temperature cycle and the recovery discharge capacity maintenance rate after high-temperature storage also tended to be further improved, similarly to the above (FIGs. 2 and 3).

Although a mechanism of the above-mentioned tendency of the improvement was not clear, it was presumed that a good film was formed on the electrode by containing both the (I) and the (II) in the nonaqueous electrolyte solution.

[Examples 1-2 to 1-14 and Comparative Examples 1-3 to 1-15]

Test cells were prepared in the same manner as in Example 1-1 except that electrolyte solutions shown in Tables 3 to 15 were used as test electrolyte solutions, and performance evaluation was performed. Evaluation results are shown in Tables 3 to 15.

[Table 3]

Table 3

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-3 | non-$PF_2$ (1.0) | | | 109 | 102 | 102 |
| Example 1-2 | $NaSO_3F$ (2.0)-$PF_2$ (1.0) | | | 138 | 39 | 113 |

[Table 4]

Table 4

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-4 | non-$BF_2$ (1.0) | | | 101 | 96 | 105 |
| Example 1-3 | $NaSO_3F$ (2.0)-$BF_2$ (1.0) | | | 131 | 35 | 120 |

[Table 5]

Table 5

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-5 | non-$PO_2F_2$ (0.5) | | | 101 | 91 | 101 |
| Example 1-4 | $NaSO_3F$ (2.0)-$PO_2F_2$ (0.5) | | | 130 | 14 | 119 |

[Table 6]

Table 6

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-6 | non-B-$PO_2F_2$(1.0) | | | 100 | 80 | 102 |
| Example 1-5 | $NaSO_3F$ (2.0)-B-$PO_2F_2$(1.0) | | | 128 | 11 | 116 |

[Table 7]

Table 7

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-7 | non-$B_2$-$PO_3F$ (1.0) | | | 101 | 82 | 102 |
| Example 1-6 | $NaSO_3F$ (2.0)-$B_2$-$PO_3F$ (1.0) | | | 129 | 12 | 113 |

[Table 8]

Table 8

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-8 | non-FSI (3.0) | | | 100 | 90 | 104 |
| Example 1-7 | $NaSO_3F$ (2.0)-FSI (3.0) | | | 123 | 33 | 114 |

[Table 9]

Table 9

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-9 | non-N $(POF_2)_2$ (1.0) | | | 101 | 88 | 103 |
| Example 1-8 | $NaSO_3F$ (2.0)-N $(POF_2)_2$ (1.0) | | | 127 | 31 | 120 |

[Table 10]

Table 10

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-10 | non-N $(POF_2)$ $(SO_2F)$ (1.5) | | | 103 | 83 | 103 |
| Example 1-9 | $NaSO_3F$ (2.0)-N $(POF_2)$ $(SO_2F)$ (1.5) | | | 131 | 27 | 121 |

[Table 11]

Table 11

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-11 | non-PRS (0.5) | | | 104 | 69 | 103 |
| Example 1-10 | $NaSO_3F$ (2.0)-PRS (0.5) | | | 127 | 10 | 119 |

[Table 12]

Table 12

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-12 | non-PS (1.0) | | | 102 | 70 | 103 |
| Example 1-11 | $NaSO_3F$ (2.0)-PS (1.0) | | | 129 | 13 | 121 |

[Table 13]

Table 13

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-13 | non-VC (1.0) | | | 103 | 99 | 104 |
| Example 1-12 | $NaSO_3F$ (2.0)-VC (1.0) | | | 133 | 29 | 120 |

[Table 14]

Table 14

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-14 | non-TMSB (1.0) | | | 102 | 75 | 104 |
| Example 1-13 | $NaSO_3F$ (2.0)-TMSB (1.0) | | | 130 | 13 | 117 |

[Table 15]

Table 15

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 1-0 | non-non | $NaNi_{0.5}Ti_{0.3}Mn_{0.2}O_2$ | Hard carbon | 100 | 100 | 100 |
| Comparative Example 1-1 | $NaSO_3F$ (2.0)-non | | | 117 | 56 | 105 |
| Comparative Example 1-15 | non-TMSP (1.0) | | | 100 | 82 | 101 |
| Example 1-14 | $NaSO_3F$ (2.0)-TMSP (1.0) | | | 124 | 21 | 112 |

From evaluation results of Tables 3 to 15, even when the type and the concentration of the (II) were changed, it was found that the discharge capacity maintenance rate after the high-temperature cycle, the effect of preventing the gas generation amount during the high-temperature cycle, and the recovery discharge capacity maintenance rate after high-temperature storage tended to be further improved, as in Example 1-1.

As for the discharge capacity maintenance rate after the high-temperature cycle, it was found that the improvement was particularly large in Examples 1-1, 1-2, 1-3, and 1-12 in which the compound represented by Formula (1) and vinylene carbonate were used as the (II).

As for the effect of preventing the gas generation amount during the high-temperature cycle, it was found that the improvement was particularly large in Examples 1-3, 1-4, 1-5, 1-6, and 1-12 in which the compound represented by Formula (1), the compound represented by Formula (2), the compound represented by Formula (3), the compound represented by Formula (4), and vinylene carbonate were used as the (II).

As for the recovery discharge capacity maintenance rate after high-temperature storage, it was found that the improvement was particularly large in Examples 1-3, 1-4, 1-8, 1-9, 1-10, 1-11, and 1-12 in which the compound represented by Formula (1), the compound represented by Formula (2), the compound represented by Formula (6), the compound represented by Formula (7), the compound represented by Formula (8), the compound represented by Formula (9), and vinylene carbonate were used as (II).

[Examples 2-1 to 2-8 and Comparative Examples 2-1 to 2-10]

Various electrolyte solutions shown in Table 16 were prepared in the same manner as the electrolyte solution No. $NaS0_3F$(2.0)-$PF_4$(1.0) except that the compositions of the electrolyte solution were changed to the compositions of the electrolyte solution shown in Table 16.

Test cells were prepared in the same manner as in Example 1-1 except that electrolyte solutions shown in Table 17 were used as the test electrolyte solutions, and performance evaluation was performed. Evaluation results are shown in Table 17.

[Table 16]

Table 16

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| $NaSO_3F$ (0.005)-$PF_4$(1.0)-D | $NaSO_3F$ | 0.005 | $NaPF_4$ ($C_2O_4$) | 1.0 | $NaPF_6$ | 1.0 | PC/EMC/DMC 30/40/30 (vol%) | None | - |
| $NaSO_3F$ (0.01)-$PF_4$(1.0)-D | | 0.01 | | | | | | | |
| $NaSO_3F$(0.1)-$PF_4$ (1.0)-D | | 0.1 | | | | | | | |
| $NaSO_3F$(1.0)-$PF_4$ (1.0)-D | | 1.0 | | | | | | | |
| $NaSO_3F$(2.0)-$PF_4$ (1.0)-D | | 2.0 | | | | | | | |
| $NaSO_3F$(5.0)-$PF_4$ (1.0)-D | | 5.0 | | | | | | | |
| $NaSO_3F$(7.0)-$PF_4$ (1.0)-D | | 7.0 | | | | | | | |
| $NaSO_3F$(8.0)-$PF_4$ (1.0)-D | | 8.0 | | | | | | | |
| $NaSO_3F$ (0.005)-non-D | | 0.005 | | | | | | | |
| $NaSO_3F$ (0.01)-non-D | | 0.01 | | | | | | | |
| $NaSO_3F$(0.1)-non-D | | 0.1 | | | | | | | |

(continued)

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| $NaSO_3F$(1.0)-non-D | | 1.0 | None | - | | | | | |
| $NaSO_3F$(2.0)-non-D | | 2.0 | | | | | | | |
| $NaSO_3F$(5.0)-non-D | | 5.0 | | | | | | | |
| $NaSO_3F$(7.0)-non-D | | 7.0 | | | | | | | |
| $NaSO_3F$(8.0)-non-D | | 8.0 | | | | | | | |
| non-$PF_4$(1.0)-D | None | - | $NaPF_4(C_2O_4)$ | 1.0 | | | | | |
| non-non-D | None | - | | - | | | | | |

[Table 17]

Table 17

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Example 2-1 | $NaSO_3F$ (0.005)-$PF_4$ (1.0)-D | | | 109 | 96 | 104 |
| Example 2-2 | $NaSO_3F$ (0.01)-$PF_4$ (1.0)-D | | | 111 | 93 | 105 |
| Example 2-3 | $NaSO_3F$ (0.1)-$PF_4$ (1.0)-D | | | 115 | 90 | 107 |
| Example 2-4 | $NaSO_3F$ (1.0)-$PF_4$ (1.0)-D | | | 124 | 62 | 113 |
| Example 2-5 | $NaSO_3F$ (2.0)-$PF_4$ (1.0)-D | | | 138 | 33 | 116 |
| Example 2-6 | $NaSO_3F$ (5.0)-$PF_4$ (1.0)-D | | | 140 | 68 | 115 |
| Example 2-7 | $NaSO_3F$ (7.0)-$PF_4$ (1.0)-D | | | 132 | 77 | 110 |
| Example 2-8 | $NaSO_3F$ (8.0)-$PF_4$ (1.0)-D | $NaNi_{0.5}Ti_{0.3}Mn_{0.2}O_2$ | Hard carbon | 113 | 91 | 107 |

(continued)

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Comparative Example 2-1 | $NaSO_3F$ (0.005)-non-D | | | 100 | 100 | 101 |
| Comparative Example 2-2 | $NaSO_3F$ (0.01)-non-D | | | 102 | 97 | 102 |
| Comparative Example 2-3 | $NaSO_3F$ (0.1)-non-D | | | 103 | 95 | 102 |
| Comparative Example 2-4 | NaSOsF (1.0)-non-D | | | 109 | 75 | 104 |
| Comparative Example 2-5 | NaSOsF (2.0)-non-D | | | 115 | 67 | 105 |
| Comparative Example 2-6 | $NaSO_3F$ (5.0)-non-D | | | 115 | 78 | 104 |
| Comparative Example 2-7 | NaSOsF (7.0)-non-D | | | 113 | 85 | 104 |
| Comparative Example 2-8 | $NaSO_3F$ (8.0)-non-D | | | 105 | 95 | 103 |
| Comparative Example 2-9 | non-$PF_4$ (1.0)-D | | | 108 | 97 | 103 |
| Comparative Example 2-10 | non-non-D | | | 100 | 100 | 100 |

From the evaluation results in Table 17, it was found that even when the concentration of (1) was variously changed, containing both the (I) and the (II) in the nonaqueous electrolyte solution achieved further improving at least one of the discharge capacity maintenance rate after the high-temperature cycle, the effect of preventing the gas generation amount during the high-temperature cycle, and the recovery discharge capacity maintenance rate after high-temperature storage, compared to a result of simply adding up an addition effect in the case of containing only the corresponding (1) (Comparative Examples 2-1 to 2-8) and an addition effect in the case of containing only the (II) (Comparative Example 2-9).
In particular, it was found that when the concentration of (I) is 0.1 to 7.0 mass%, the improvement was large.

[Examples 3-1 to 3-6 and Comparative Examples 3-1 to 3-6]

Various electrolyte solutions shown in Table 18 were prepared in the same manner as the electrolyte solution No. $NaS0_3F$(2.0)-$PF_4$(1.0) except that the compositions of the electrolyte solution were changed to the compositions of the electrolyte solution shown in Table 18.
Test cells were prepared in the same manner as in Example 1-1 except that electrolyte solutions shown in Table 19 were used as the test electrolyte solutions, and performance evaluation was performed. Evaluation results are shown in Table 19.

[Table 18]

Table 18

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| $NaSO_3F$(2.0)-VC (0.05)-D | $NaSO_3F$ | 2.0 | VC | 0.05 | $NaPF_6$ | 1.0 | PC/EMC/DMC 30/40/30 (vol%) | None | - |
| $NaSO_3F$(2.0)-VC (0.1)-D | | | | 0.1 | | | | | |
| $NaSO_3F$(2.0)-VC (1.0)-D | | | | 1.0 | | | | | |
| $NaSO_3F$(2.0)-VC (2.0)-D | | | | 2.0 | | | | | |
| $NaSO_3F$(2.0)-VC (5.0)-D | | | | 5.0 | | | | | |
| $NaSO_3F$(2.0)-VC (6.0)-D | | | | 6.0 | | | | | |
| non-VC(0.05)-D | None | - | | 0.05 | | | | | |
| non-VC(0.1)-D | | | | 0.1 | | | | | |
| non-VC(1.0)-D | | | | 1.0 | | | | | |
| non-VC(2.0)-D | | | | 2.0 | | | | | |
| non-VC(5.0)-D | | | | 5.0 | | | | | |
| non-VC(6.0)-D | | | | 6.0 | | | | | |
| $NaSO_3F$(2.0)-non-D | $NaSO_3F$ | 2.0 | None | - | | | | | |
| non-non-D | None | - | None | - | | | | | |

[Table 19]

Table 19

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Example 3-1 | $NaSO_3F$ (2.0)-VC (0.05)-D | $NaNi_{0.5}Ti_{0.3}Mn_{0.2}O_2$ | Hard carbon | 115 | 66 | 106 |
| Example 3-2 | $NaSO_3F$ (2.0)-VC (0.1)-D | | | 118 | 62 | 108 |
| Example 3-3 | $NaSO_3F$ (2.0)-VC (1.0)-D | | | 133 | 35 | 121 |
| Example 3-4 | $NaSO_3F$ (2.0)-VC (2.0)-D | | | 130 | 44 | 119 |
| Example 3-5 | $NaSO_3F$ (2.0)-VC (5.0)-D | | | 124 | 58 | 115 |
| Example 3-6 | $NaSO_3F$ (2.0)-VC (6.0)-D | | | 117 | 74 | 108 |
| Comparative Example 3-1 | non-VC (0.05)-D | | | 100 | 100 | 101 |
| Comparative Example 3-2 | non-VC (0.1)-D | | | 102 | 100 | 102 |
| Comparative Example 3-3 | non-VC (1.0)-D | | | 103 | 100 | 103 |
| Comparative Example 3-4 | non-VC (2.0)-D | | | 104 | 102 | 104 |
| Comparative Example 3-5 | non-VC (5.0)-D | | | 104 | 105 | 105 |
| Comparative Example 3-6 | non-VC (6.0)-D | | | 102 | 108 | 102 |
| Comparative Example 2-5 | NaSOsF (2.0)-non-D | | | 115 | 67 | 105 |
| Comparative Example 2-10 | non-non-D | | | 100 | 100 | 100 |

From the evaluation results in Table 19, it was found that even when the concentration of (II) is variously changed, containing both the (I) and the (II) in the nonaqueous electrolyte solution achieved further improving at least

one of the discharge capacity maintenance rate after the high-temperature cycle, the effect of preventing the gas generation amount during the high-temperature cycle, and the recovery discharge capacity maintenance rate after high-temperature storage, compared to a result of simply adding up an addition effect in the case of containing only the (1) (Comparative Example 2-5) and an addition effect in the case of containing only the corresponding (II) (Comparative Examples 3-1 to 3-6).

In particular, it was found that when the concentration of (II) is 0.1 to 5 mass%, the improvement was large.

[Examples 4-1 to 4-6 and Comparative Examples 4-1 to 4-6]

Various electrolyte solutions shown in Table 20 were prepared in the same manner as the electrolyte solution No. $NaS0_3F$(2.0)-$PF_4$(1.0) except that the compositions of the electrolyte solution were changed to the compositions of the electrolyte solution shown in Table 20.

Test cells were prepared in the same manner as in Example 1-1 except that electrolyte solutions shown in Table 21 were used as the test electrolyte solutions, and performance evaluation was performed. Evaluation results are shown in Table 21.

Abbreviations in the tables are as follows.

FEC: fluoroethylene carbonate
DTD: 1,3,2-dioxathiolane-2,2-dioxide
EPFP: (ethoxy)pentafluorocyclotriphosphazene

[Table 20]

Table 20

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| $NaSO_3F$(2.0)-$PF_4$(1.0) $PO_2F_2$(1.0)-FEC(0.5)-D | $NaSO_3F$ | 2.0 | $NaPF_4(C_2O_4)$<br>$NaPO_2F_2$ | 1.0<br>1.0 | $NaPF_6$ | 1.0 | PC/EMC/DMC 30/40/30 (vol%) | FEC | 0.5 |
| $NaSO_3F$(2.0)-non-FEC (0.5)-D | $NaSO_3F$ | 2.0 | None | - | | | | FEC | 0.5 |
| non-$PF_4$(1.0)$PO_2F_2$ (1.0)-FEC(0.5)-D | None | - | $NaPF_4(C_2O_4)$<br>$NaPO_2F_2$ | 1.0<br>1.0 | | | | FEC | 0.5 |
| $NaSO_3F$(2.0)-B-$PO_2F_2$(1.0) $PO_2F_2$(0.5)-DTD(0.5)-D | $NaSO_3F$ | 2.0 | $NaBF_3(PO_2F_2)$<br>$NaPO_2F_2$ | 1.0<br>0.5 | | | | DTD | 0.5 |
| $NaSO_3F$(2.0)-non-DTD (0.5)-D | $NaSO_3F$ | 2.0 | None | - | | | | DTD | 0.5 |
| non-B-$PO_2F_2$(1.0)$PO_2F_2$ (0.5)-DTD(0.5)-D | None | - | $NaBF_3(PO_2F_2)$<br>$NaPO_2F_2$ | 1.0<br>0.5 | | | | DTD | 0.5 |
| $NaSO_3F$(2.0)-VC(1.0)$PO_2F_2$ (1.0)-EPFP(1.0)-D | $NaSO_3F$ | 2.0 | VC<br>$NaPO_2F_2$ | 1.0<br>1.0 | | | | EPFP | 1 |
| $NaSO_3F$(2.0)-non-EPFP (1.0)-D | $NaSO_3F$ | 2.0 | None | - | | | | EPFP | 1 |
| non-VC(1.0)$PO_2F_2$ (1.0)-EPFP(1 .0)-D | None | - | VC<br>$NaPO_2F_2$ | 1.0<br>1.0 | | | | EPFP | 1 |

(continued)

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| $NaSO_3F$(2.0)-$PF_4$(1.0) $PO_2F_2$(1.0)-D | $NaSO_3F$ | 2.0 | $NaPF_4(C_2O_4)$<br>$NaPO_2F_2$ | 1.0<br>1.0 | | | | None | - |
| $NaSO_3F$(2.0)-B-$PO_2F_2$(1.0) $PO_2F_2$(0.5)-D | $NaSO_3F$ | 2.0 | $NaBF_3(PO_2F_2)$<br>$NaPO_2F_2$ | 1.0<br>0.5 | | | | None | - |
| $NaSO_3F$(2.0)-VC(1.0)$PO_2F_2$ (1.0)-D | $NaSO_3F$ | 2.0 | VC<br>$NaPO_2F_2$ | 1.0<br>1.0 | | | | None | - |
| non-non-D | None | - | None | - | | | | None | - |

[Table 21]

Table 21

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Example 4-1 | $NaSO_3F$(2.0)-$PF_4$(1.0)$PO_2F_2$(1.0)-FEC(0.5)-D | $NaNi_{0.5}Ti_{0.3}Mn_{0.2}O_2$ | Hard carbon | 146 | 60 | 121 |
| Comparative Example 4-1 | $NaSO_3F$(2.0)-non-FEC(0.5)-D | | | 116 | 105 | 107 |
| Comparative Example 4-2 | non-$PF_4$(1.0)$PO_2F_2$(1.0)-FEC(0.5)-D | | | 109 | 101 | 103 |
| Example 4-2 | $NaSO_3F$(2.0)-B-$PO_2F_2$(1.0)$PO_2F_2$(0.5)-DTD(0.5)-D | | | 147 | 18 | 120 |
| Comparative Example 4-3 | $NaSO_3F$(2.0)-non-DTD(0.5)-D | | | 118 | 54 | 108 |
| Comparative Example 4-4 | non-B-$PO_2F_2$(1.0)$P0_2F_2$(0.5)-DTD(0.5)-D | | | 118 | 69 | 105 |
| Example 4-3 | $NaSO_3F$(2.0)-VC(1.0)$PO_2F_2$(1.0)-EPFP(1.0)-D | | | 139 | 25 | 123 |
| Comparative Example 4-5 | $NaSO_3F$(2.0)-non-EPFP(1.0)-D | | | 117 | 55 | 106 |
| Comparative Example 4-6 | non-VC(1.0)$PO_2F_2$(1.0)-EPFP(1.0)-D | | | 103 | 90 | 104 |
| Example 4-4 | $NaSO_3F$(2.0)-$PF_4$(1.0)$PO_2F_2$(1.0)-D | | | 139 | 26 | 122 |

(continued)

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Example 4-5 | $NaSO_3F$(2.0)-B-$PO_2F_2$(1.0)$PO_2F_2$(0.5)-D | | | 131 | 20 | 118 |
| Example 4-6 | $NaSO_3F$(2.0)-VC(1.0)$PO_2F_2$(1.0)-D | | | 135 | 29 | 123 |
| Comparative Example 2-10 | non-non-D | | | 100 | 100 | 100 |

From results in Table 21, even when the other additive was further contained (Examples 4-1 to 4-3), it was found that the discharge capacity maintenance rate after the high-temperature cycle tended to be further improved, similarly to cases in which no other additive was contained (Examples 4-4, 4-5, and 4-6).

Regarding an electrolyte solution of Example 4-2 (Comparative Examples 4-3 and 4-4), it was found that there was a tendency that the storage stability of the electrolyte solution was inferior to that of the electrolyte solutions according to other examples of the present disclosure. Specifically, after being stored at 25°C for one month, the electrolyte solution turned dark brown. As a result of gas chromatography analysis, it was found that a DTD concentration in the electrolyte solution decreased to 0.35 mass%.

[Example 5-1, Comparative Examples 5-1 and 5-2, Example 6-1, and Comparative Examples 6-1 and 6-2]

Various electrolyte solutions shown in Table 22 were prepared in the same manner as the electrolyte solution No. $NaSO_3F$(2.0)-$PF_4$(1.0) except that the compositions of the electrolyte solution were changed to the compositions of the electrolyte solution shown in Table 22.

Test cells were prepared in the same manner as in Example 1-1 except that electrolyte solutions shown in Table 23 were used as the test electrolyte solutions, and performance evaluation was performed. Evaluation results are shown in Table 23.

[Table 22]

Table 22

| Composition of Electrolyte Solution | | | | | | | | | |
|---|---|---|---|---|---|---|---|---|---|
| Electrolyte Solution No. | (1) Fluorosulfate | | (II) | | (III) Sodium salt | | (IV) Nonaqueous solvent | Other additives | |
| | Type | Concentration [mass%] | Type | Concentration [mass%] | Type | Concentration [mol/L] | | Type | Concentration [mass%] |
| $LiSO_3F$(2.0)-$PF_4$(1.0)-D | $LiSO_3F$ | 2.0 | $NaPF_4(C_2O_4)$ | 1.0 | $NaPF_6$ | 1.0 | PC/EMC/DMC 30/40/30 (vol%) | None | - |
| $LiSO_3F$(2.0)-non-D | $LiSO_3F$ | 2.0 | None | - | | | | | |
| non-$PF_4$(1.0)-D | None | - | $NaPF_4(C_2O_4)$ | 1.0 | | | | | |
| $TEASO_3F$(2.0)-VC(1.0)-D | $LiSO_3F$ | 2.0 | VC | 1.0 | | | | | |
| $TEASO_3F$(2.0)-non-D | $LiSO_3F$ | 2.0 | None | - | | | | | |
| non-VC(1.0)-D | None | - | VC | 1.0 | | | | | |
| non-non-D | None | - | None | - | | | | | |

[Table 23]

Table 23

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Gas generation amount during high-temperature cycle [%] | Recovery discharge capacity maintenance rate after high-temperature storage [%] |
| Example 5-1 | $LiSO_3F$ (2.0)-$PF_4$ (1.0)-D | $NaNi_{0.5}Ti_{0.3}Mn_{0.2}O_2$ | Hard carbon | 127 | 51 | 110 |
| Comparative Example 5-1 | $LiSO_3F$ (2.0)-non-D | | | 111 | 69 | 103 |
| Comparative Example 5-2 | non-$PF_4$ (1.0)-D | | | 108 | 97 | 103 |
| Example 6-1 | $TEASO_3F$ (2.0)-VC (1.0)-D | | | 125 | 68 | 114 |
| Comparative Example 6-1 | $TEASO_3F$ (2.0)-non-D | | | 109 | 79 | 104 |
| Comparative Example 6-2 | non-Vc (1.0)-D | | | 103 | 100 | 103 |
| Comparative Example 2-10 | non-non-D | | | 100 | 100 | 100 |

From results in Table 23, it was found that even when the type of (1) was changed, containing both the (I) and the (II) in the nonaqueous electrolyte solution achieved further improving the discharge capacity maintenance rate after the high-temperature cycle, compared to a result of simply adding up an addition effect in the case of containing only the corresponding (1) (Comparative Examples 1-5 and 6-1) and an addition effect in the case of containing only the (II) (Comparative Examples 5-2 and 6-2).

Further, it was found that the effect of preventing the gas generation amount during the high-temperature cycle and the recovery discharge capacity maintenance rate after high-temperature storage also tended to be improved, similarly to the above.

INDUSTRIAL APPLICABILITY

One embodiment of the present disclosure allows for providing an electrolyte solution for a nonaqueous sodium ion battery capable of improving at least one of a cycle characteristic of the nonaqueous sodium ion battery at a high temperature of 60°C or higher, (an effect of preventing) a gas generation amount during a high-temperature cycle test, and a high-temperature storage characteristic, a nonaqueous sodium ion battery using the same, and a method for producing the nonaqueous sodium ion battery are provided.

Although the present disclosure has been described in detail and with reference to specific examples, it will be apparent to those skilled in the art that various changes and modifications can be made without departing from the spirit and scope of the present disclosure.

The present application is based on a Japanese Patent Application No. 2021-082006 filed on May 13, 2021, and the contents of which are incorporated herein by reference.

## Claims

1. An electrolyte solution for a nonaqueous sodium ion battery comprising:

(I) a fluorosulfate;
(II) at least one selected from the group consisting of compounds represented by the following Formulae (1) to (9), vinylene carbonate, tris(trimethylsilyl)borate, and tris(trimethylsilyl)phosphate;
(III) a sodium salt; and
(IV) a nonaqueous solvent,

[Chem. 1]

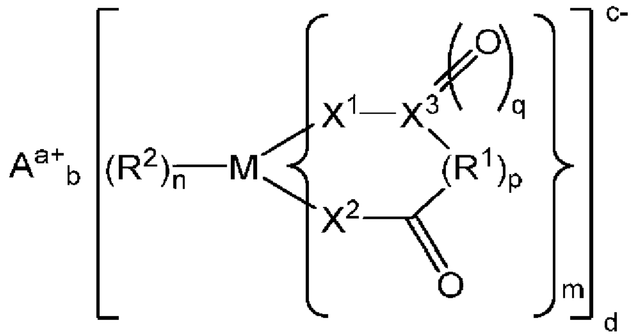

(1)

where, in Formula (1), M represents a boron atom or a phosphorus atom, m is an integer of 1 to 3, n is an integer of 0 to 4, p is 0 or 1, $R^1$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms and each of these groups optionally contain a substituent or a heteroatom in a structure thereof, when p is 1 and m is 2 or more, m R's may bond to each other, and when p is 0, $R^1$ does not exist and is a single bond;
$R^2$ represents a halogen atom, $X^1$ and $X^2$ each independently represent an oxygen atom or a sulfur atom, $X^3$ represents a carbon atom or a sulfur atom, and q is 1 when $X^3$ is the carbon atom, and is 1 or 2 when $X^3$ is the sulfur atom;
$A^{a+}$ represents an alkali metal cation, an alkaline earth metal cation, or an onium cation, a represents a valence number of a cation; and
a to d are each independently 1 or 2, and satisfy $a \times b = c \times d$,

[Chem. 2]

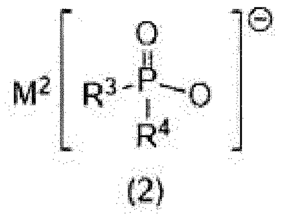

(2)

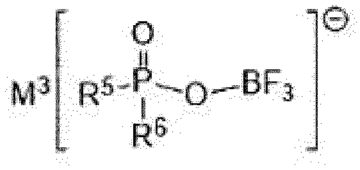

(3)

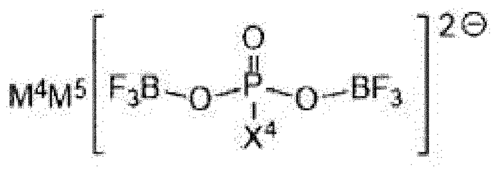

(4)

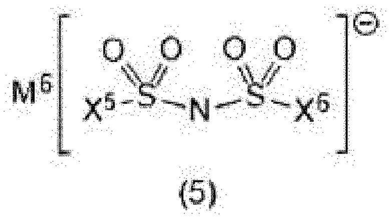

(5)

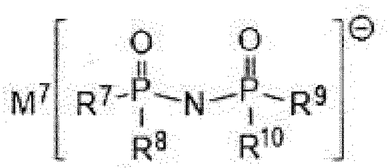

(6)

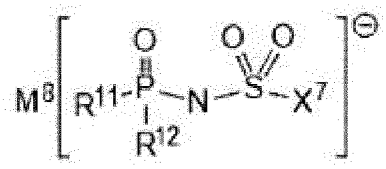

(7)

where, in Formulae (2), (3), (6), and (7), $R^3$ to $R^{12}$ are each independently a fluorine atom, or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and a fluorine atom, an oxygen atom, and/or an unsaturated bond is optionally present in the organic group;

in Formula (4), $X^4$ represents a fluorine atom;

in Formulae (5) and (7), $X^5$ to $X^7$ are each independently a fluorine atom, or an organic group selected from the group consisting of an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, a fluorine atom, an oxygen atom, and/or an unsaturated bond is optionally present in the organic group, and each of Formulae (2) to (7) includes at least one P-F bond and/or S-F bond; and

in Formulae (2) to (7), $M^2$ to $M^8$ are each independently a proton, a metal cation, or an onium cation,

[Chem. 3]

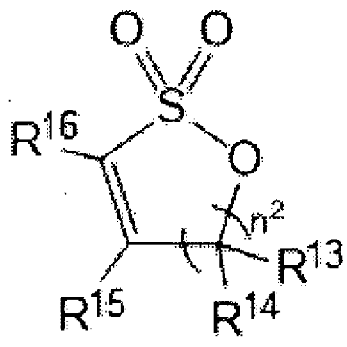

(8)

where, in Formula (8), $R^{13}$ to $R^{16}$ are each independently a hydrogen atom, an alkyl group having 1 to 10 carbon atoms, or a fluoroalkyl group having 1 to 10 carbon atoms, and $n^2$ is an integer of 1 to 3, and

[Chem. 4]

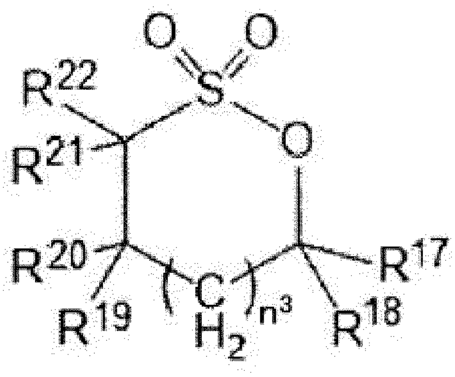

(9)

where, in Formula (9), $R^{17}$ to $R^{22}$ are each independently a hydrogen atom, an alkyl group having 1 to 10 carbon atoms, or a fluoroalkyl group having 1 to 10 carbon atoms, and $n^3$ is an integer of 0 to 2.

2. The electrolyte solution for a nonaqueous sodium ion battery according to claim 1, wherein a content x of the (1) satisfies 0.008 mass% $< x \leq$ 7.5 mass% with respect to the total amount of the electrolyte solution for a nonaqueous sodium ion battery.

3. The electrolyte solution for a nonaqueous sodium ion battery according to claim 1, wherein a counter cation of the (1) is a lithium ion, a sodium ion, a potassium ion, a tetraalkylammonium ion, a tetraalkylphosphonium ion, or an ammonium ion having a spiro skeleton.

4. The electrolyte solution for a nonaqueous sodium ion battery according to claim 1, wherein a content y of the (II) satisfies 0.1 mass% $\leq y <$ 5.0 mass% with respect to the total amount of the electrolyte solution for a nonaqueous sodium ion battery.

5. The electrolyte solution for a nonaqueous sodium ion battery according to claim 1, wherein the compound represented by the Formula (1) is at least one selected from the group consisting of $NaBF_2(C_2O_4)$, $NaPF_4(C_2O_4)$, $NaPF_2(C_2O_4)_2$, and $NaP(C_2O_4)_3$.

6. The electrolyte solution for a nonaqueous sodium ion battery according to claim 1, wherein the compound represented by the Formula (2) is at least one selected from the group consisting of compounds in which $R^3$ and $R^4$ are each independently a fluorine atom, a methoxy group, an ethoxy group, or a propargyloxy group, and $M^2$ is a lithium ion, a sodium ion, a potassium ion, or a tetraalkylammonium ion.

7. The electrolyte solution for a nonaqueous sodium ion battery according to claim 1, wherein the compound represented by the Formula (3) is at least one selected from the group consisting of compounds in which $R^5$ and $R^6$ are each independently a fluorine atom, a methoxy group, or an ethoxy group, and $M^3$ is a lithium ion, a sodium ion, a potassium ion, or a tetraalkylammonium ion.

8. The electrolyte solution for a nonaqueous sodium ion battery according to claim 1, wherein the compound represented by the Formula (4) is at least one selected from the group consisting of compounds in which $M^4$ and $M^5$ are each independently a lithium ion, a sodium ion, a potassium ion, or a tetraalkylammonium ion.

9. The electrolyte solution for a nonaqueous sodium ion battery according to claim 1, wherein the compound represented by the Formula (5) is at least one selected from the group consisting of $LiN(SO_2F)_2$, $LiN(SO_2F)(SO_2CF_3)$, $NaN(SO_2F)_2$, $NaN(SO_2F)(SO_2CF_3)$, $KN(SO_2F)_2$, and $KN(SO_2F)(SO_2CF_3)$.

10. The electrolyte solution for a nonaqueous sodium ion battery according to claim 1, wherein the compound represented by the Formula (6) is at least one selected from the group consisting of $LiN(POF_2)_2$, $LiN(POF_2)(PO(OCH_3)_2)$, $NaN(POF_2)_2$, $NaN(POF_2)(PO(OCH_3)_2)$, $KN(POF_2)_2$, and $KN(POF_2)(PO(OCH_3)_2)$.

11. The electrolyte solution for a nonaqueous sodium ion battery according to claim 1, wherein the compound represented by the Formula (7) is at least one selected from the group consisting of $LiN(POF_2)(SO_2F)$, $LiN(PO(OCH_3)_2)(SO_2F)$, $NaN(POF_2)(SO_2F)$, $NaN(PO(OCH_3)_2)(SO_2F)$, $KN(POF_2)(SO_2F)$, and $KN(PO(OCH_3)_2)(SO_2F)$.

12. The electrolyte solution for a nonaqueous sodium ion battery according to claim 1, wherein the compound represented by the Formula (8) is at least one selected from the group consisting of 1,3-propene sultone, 1,4-butene sultone, and 2-methyl-1,3-propene sultone.

13. The electrolyte solution for a nonaqueous sodium ion battery according to claim 1, wherein the compound represented by the Formula (9) is at least one selected from the group consisting of 1,3-propane sultone, 1,4-butane sultone, 1-methyl-1,3-propane sultone, and 3-methyl-1,3-propane sultone.

14. The electrolyte solution for a nonaqueous sodium ion battery according to any one of claims 1 to 13, wherein the nonaqueous solvent contains at least one selected from the group consisting of a cyclic ester, a chain ester, a cyclic ether, and a chain ether.

15. The electrolyte solution for a nonaqueous sodium ion battery according to any one of claims 1 to 13, wherein the sodium salt is at least one selected from the group consisting of $NaPF_6$, $NaBF_4$, $NaBF_2(C_2O_4)$, $NaPF_4(C_2O_4)$, $NaPF_2(C_2O_4)_2$, $NaSbF_6$, $NaAsF_6$, $NaClO_4$, $NaN(SO_2F)_2$, $NaN(SO_2CF_3)_2$, $NaN(SO_2F)(SO_2CF_3)$, $NaN(C_aF_{2a+1}SO_2)(C_bF_{2b+1}SO_2)$ where a and b are integers satisfying $2 \leq a \leq 20$ and $2 \leq b \leq 20$, $NaSO_3CF_3$, $NaSO_3C_4F_9$, $NaN(POF_2)_2$, $NaN(POF_2)(SO_2F)$, $NaPO_2F_2$, $NaC(SO_2CF_3)_3$, $NaPF_3(C_3F_7)_3$, $NaB(CF_3)_4$, $NaBF_3(C_2F_5)$, $NaAlO_2$, $NaAlCl_4$, NaCl, and NaI.

16. The electrolyte solution for a nonaqueous sodium ion battery according to any one of claims 1 to 13, wherein a concentration z of the (111) satisfies $0.3 \text{ mol/L} < z < 5.0 \text{ mol/L}$ with respect to the total amount of the electrolyte solution for a nonaqueous sodium ion battery.

17. The electrolyte solution for a nonaqueous sodium ion battery according to any one of claims 1 to 13, further comprising: at least one compound selected from the group consisting of cyclohexylbenzene, t-butyl benzene, t-amyl benzene, fluorobenzene, a vinylene carbonate oligomer having a number average molecular weight of 170 to 5,000, vinyl ethylene carbonate, fluoroethylene carbonate, 1,6-diisocyanatohexane, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, succinonitrile, (ethoxy)pentafluorocyclotriphosphazene, methane sulfonyl fluoride, tetrafluoro(picolinato)phosphate, and 1,3-dimethyl-1,3 -divinyl-1,3-di(1,1,1,3,3,3-hexafluoroisopropyl)disiloxane.

18. A nonaqueous sodium ion battery comprising at least a positive electrode, a negative electrode, and the electrolyte solution for a nonaqueous sodium ion battery according to any one of claims 1 to 13.

19. A method for producing a nonaqueous sodium ion battery, the method comprising preparing the electrolyte solution for a nonaqueous sodium ion battery according to any one of claims 1 to 13, and filling an empty cell including at

least a positive electrode and a negative electrode with the electrolyte solution for a nonaqueous sodium ion battery.

FIG. 1

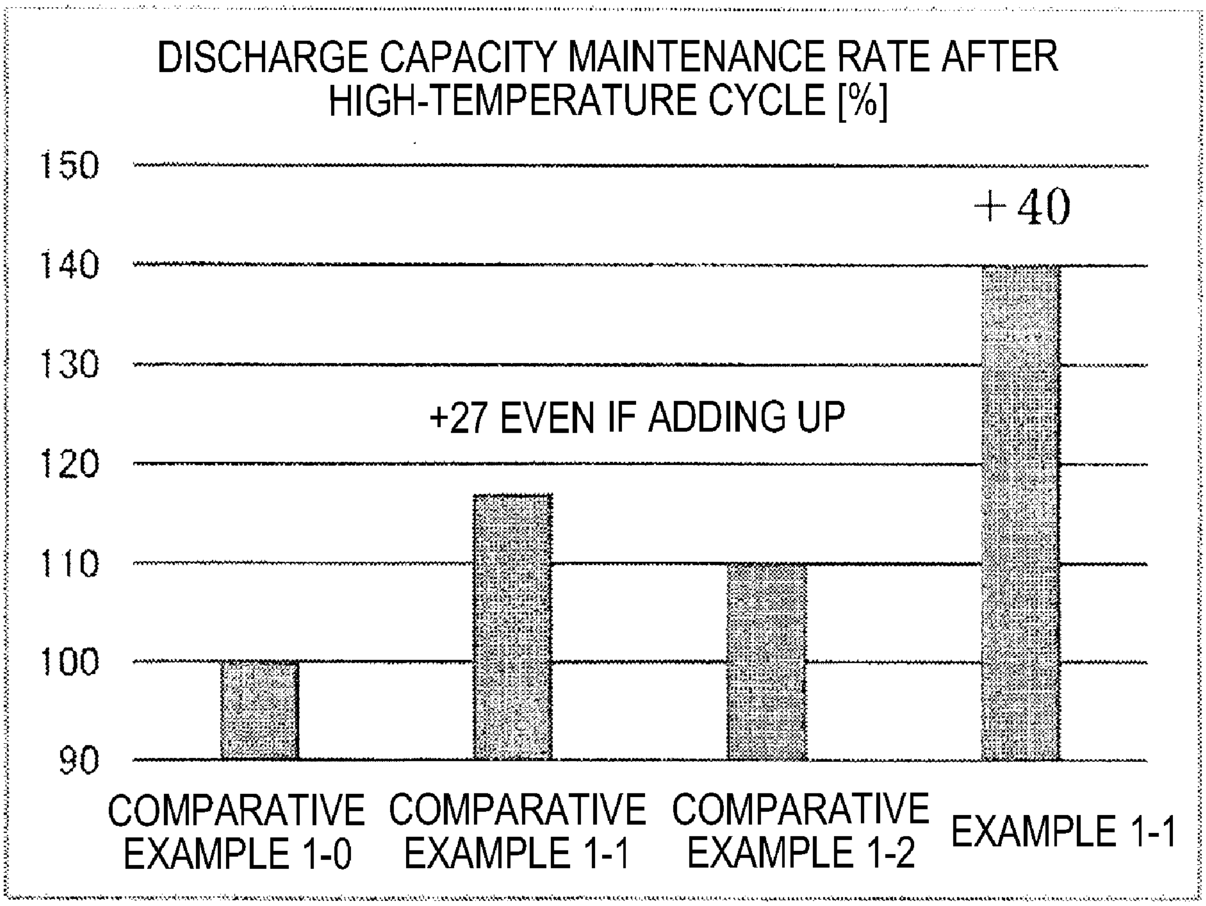
DISCHARGE CAPACITY MAINTENANCE RATE AFTER HIGH-TEMPERATURE CYCLE [%]
150
140
130
120
110
100
90
+40
+27 EVEN IF ADDING UP
COMPARATIVE EXAMPLE 1-0
COMPARATIVE EXAMPLE 1-1
COMPARATIVE EXAMPLE 1-2
EXAMPLE 1-1

FIG. 2

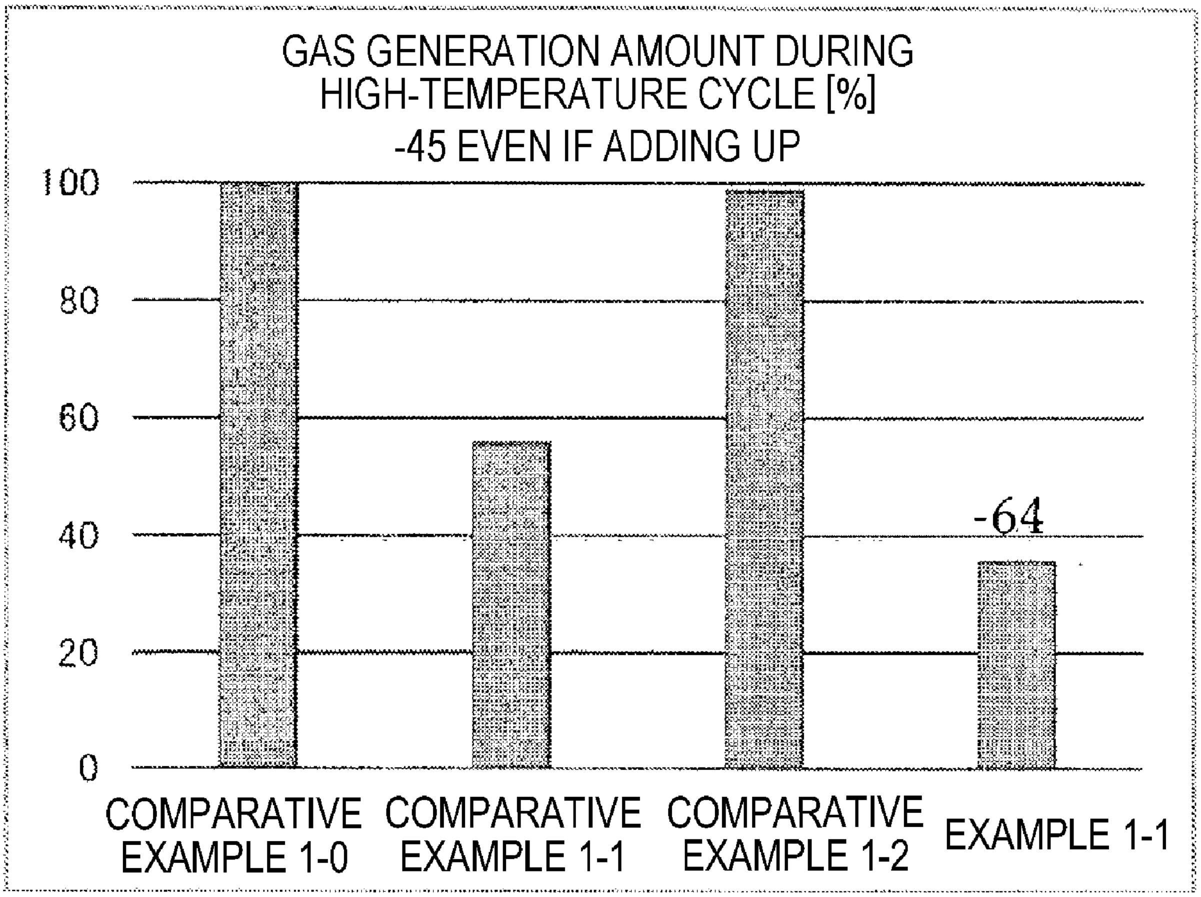
GAS GENERATION AMOUNT DURING
HIGH-TEMPERATURE CYCLE [%]
-45 EVEN IF ADDING UP
100
80
60
40
20
0
-64
COMPARATIVE EXAMPLE 1-0
COMPARATIVE EXAMPLE 1-1
COMPARATIVE EXAMPLE 1-2
EXAMPLE 1-1

# FIG. 3

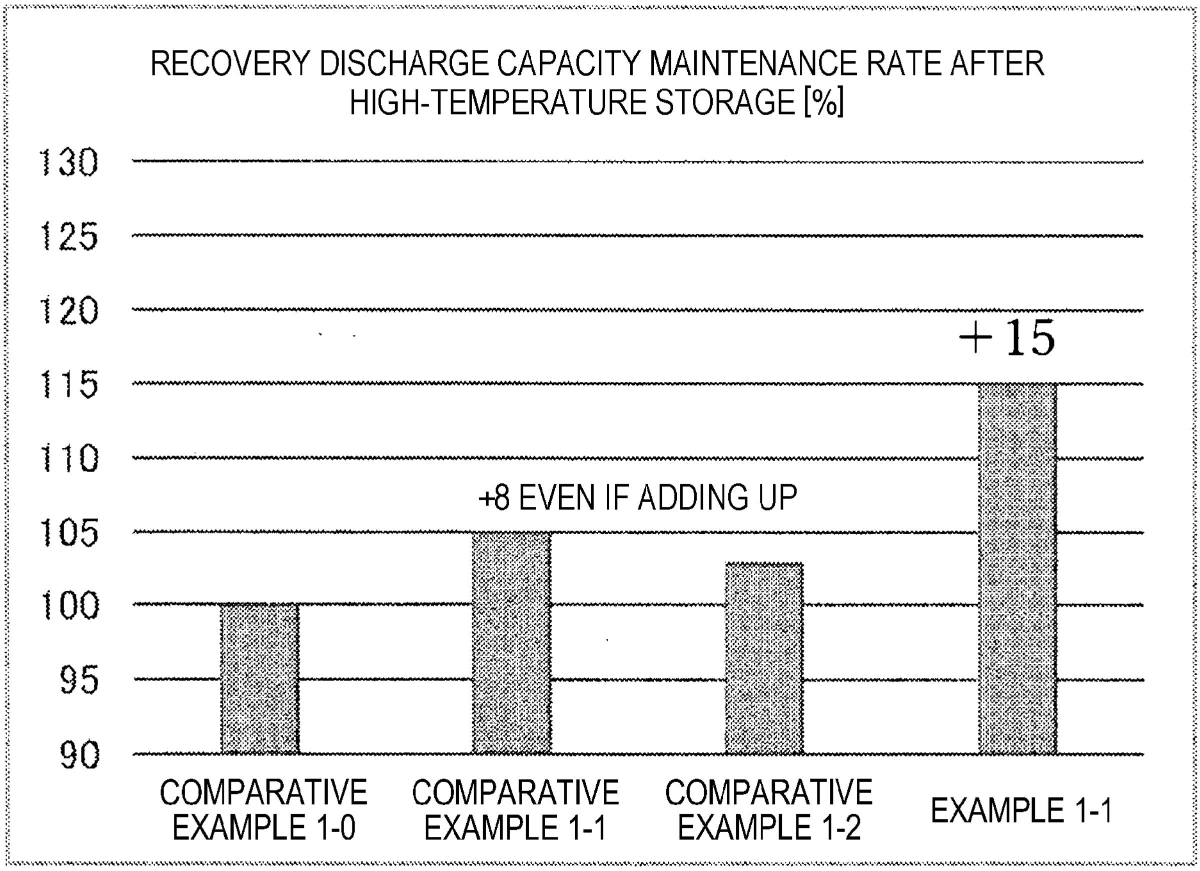
RECOVERY DISCHARGE CAPACITY MAINTENANCE RATE AFTER HIGH-TEMPERATURE STORAGE [%]
130
125
120
115
110
105
100
95
90
+15
+8 EVEN IF ADDING UP
COMPARATIVE EXAMPLE 1-0
COMPARATIVE EXAMPLE 1-1
COMPARATIVE EXAMPLE 1-2
EXAMPLE 1-1

## INTERNATIONAL SEARCH REPORT

International application No.
**PCT/JP2022/019976**

**A. CLASSIFICATION OF SUBJECT MATTER**

***H01M 10/0567***(2010.01)i; ***H01M 10/054***(2010.01)i; ***H01M 10/0568***(2010.01)i; ***H01M 10/0569***(2010.01)i; ***H01M 10/058***(2010.01)i
FI: H01M10/0567; H01M10/0569; H01M10/0568; H01M10/054; H01M10/058

According to International Patent Classification (IPC) or to both national classification and IPC

**B. FIELDS SEARCHED**

Minimum documentation searched (classification system followed by classification symbols)

H01M10/0567; H01M10/054; H01M10/0568; H01M10/0569; H01M10/058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/006238 A1 (CENTRAL GLASS CO., LTD.) 14 January 2021 (2021-01-14) | 1-19 |
| A | JP 2019-46614 A (MITSUBISHI CHEMICAL CORP.) 22 March 2019 (2019-03-22) | 1-19 |
| A | JP 2011-187440 A (MITSUBISHI CHEMICAL CORP.) 22 September 2011 (2011-09-22) | 1-19 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 July 2022** | **26 July 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/019976**

| Patent document cited in search report | Publication date (day/month/year) | Patent family member(s) | Publication date (day/month/year) |
|---|---|---|---|
| WO 2021/006238 A1 | 14 January 2021 | (Family: none) | |
| JP 2019-46614 A | 22 March 2019 | (Family: none) | |
| JP 2011-187440 A | 22 September 2011 | JP 2013-152956 A | |
| | | JP 2016-29668 A | |
| | | US 2012/0308881 A1 | |
| | | US 2013/0280622 A1 | |
| | | WO 2011/099585 A1 | |
| | | EP 2535976 A1 | |
| | | EP 2958181 A1 | |
| | | CN 102754268 A | |
| | | KR 10-2012-0133378 A | |
| | | KR 10-2014-0007000 A | |
| | | CN 104167564 A | |
| | | KR 10-2016-0043149 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013048077 A
- JP 2016181467 A
- JP 2011187440 A
- WO 2018179884 A
- JP 2021082006 A